(19) Europäisches Patentamt
European Patent Office
Office européen des brevets

(11) EP 4 412 249 A1

(12) EUROPEAN PATENT APPLICATION
published in accordance with Art. 153(4) EPC

(43) Date of publication:
07.08.2024 Bulletin 2024/32

(51) International Patent Classification (IPC):
H04R 17/00 (2006.01)   G01F 1/667 (2022.01)

(21) Application number: 22876028.6

(52) Cooperative Patent Classification (CPC):
G01F 1/66; H04R 17/00; G01F 1/667

(22) Date of filing: 22.09.2022

(86) International application number:
PCT/JP2022/035344

(87) International publication number:
WO 2023/054161 (06.04.2023 Gazette 2023/14)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 01.10.2021 JP 2021162464

(71) Applicant: Panasonic Intellectual Property
Management Co., Ltd.
Kadoma-shi, Osaka 571-0057 (JP)

(72) Inventors:
• NAKANO, Makoto
Osaka 571-0057 (JP)

• HASHIMOTO, Masahiko
Osaka 571-0057 (JP)
• SATOU, Masato
Osaka 571-0057 (JP)
• MASUDA, Tomoki
Osaka 571-0057 (JP)
• NAKABAYASHI, Yuuji
Osaka 571-0057 (JP)
• NAGAHARA, Hidetomo
Osaka 571-0057 (JP)

(74) Representative: SSM Sandmair
Patentanwälte Rechtsanwalt
Partnerschaft mbB
Joseph-Wild-Straße 20
81829 München (DE)

(54) VIBRATION PROPAGATION MEMBER, VIBRATION TRANSMITTER/RECEIVER USING SAME, FLOWMETER, CURRENT METER, CONCENTRATION METER, AND MANUFACTURING METHOD

(57) The problem to be overcome by the present disclosure is to provide a vibration propagation member configured to operate by being bonded to a vibration means, a vibration transceiver using the vibration propagation member, a measuring instrument using the vibration transceiver such as a flowmeter, a velocity meter, and a concentration meter, and a manufacturing method. A vibration propagation member (2) is configured to operate by being bonded to one surface of a vibration means (1). The vibration propagation member (2) includes: a top plate (3); a sidewall (4); and at least one vertical partition (5) disposed perpendicularly to the top plate (3).

FIG. 2

EP 4 412 249 A1

**Description**

**Technical Field**

The present disclosure generally relates to a vibration propagation member, a vibration transceiver using the same, a flowmeter, a velocity meter, a concentration meter, and a manufacturing method. More particularly, the present disclosure relates to a vibration propagation member configured to operate by being bonded to a vibration means, a vibration transceiver using the same, a measuring instrument such as a flowmeter, a velocity meter, and a concentration meter, and a manufacturing method.

**Background Art**

A known vibration propagation member of this type has been used as a disklike member configured as a mixture of an epoxy resin and a microsphere of glass. The disklike member is bonded onto a piezoelectric member and used as an ultrasonic transceiver or an ultrasonic measuring instrument (see, for example, Patent Literature 1).

However, when the fluid under measurement is a corrosive fluid and/or when the measurement needs to be made in a high-temperature, high-humidity environment or in an ultrahigh temperature environment, it is difficult for an ultrasonic transceiver using the known vibration propagation member to operate with good stability.

Besides, the design of the vibration propagation member allows only a low degree of freedom. That is to say, the design of the vibration propagation member may be modified only in terms of its thickness and external dimensions, for example. In addition, the frequency design thereof also allows a low degree of freedom. These are problems with the known vibration propagation member.

Furthermore, in the known art, the vibration means and the vibration propagation member configured to operate by being bonded to one surface of the vibration means have their materials selected, and are designed in terms of external dimensions such as the thickness and outside diameter of the vibration propagation member, according to the medium that propagates the vibration with the density of the vibration propagation member, the sonic velocity, and other factors taken into account. In addition, the known vibration propagation member is made of a single material, and therefore, it is difficult to control the partial characteristics of the vibration propagation member.

**Citation List**

**Patent Literature**

Patent Literature 1: JP 2004-125804 A

**Summary of Invention**

In view of these problems with the related art, it is therefore an object of the present disclosure to provide a vibration propagation member that may operate with good stability even when the fluid under measurement is a corrosive fluid or even when measurement needs to be made in a high-temperature, high-humidity environment and that allows a high degree of freedom of design.

**Brief Description of Drawings**

FIG. 1 is a cross-sectional view of a vibration propagation member according to a first embodiment, which is provided on one surface of a vibration means;

FIG. 2 illustrates a cross-sectional view of the vibration propagation member according to the first embodiment and a cross-sectional view of the vibration propagation member according to the first embodiment as taken along a line segment X;

FIGS. 3A-3D are perspective views illustrating the procedure of manufacturing the vibration propagation member according to the first embodiment;

FIG. 4 is a cross-sectional view of a vibration transceiver according to the first embodiment;

FIG. 5 is a set of cross-sectional views illustrating the procedure of manufacturing the vibration transceiver according to the first embodiment;

FIGS. 6A and 6B show the results of measurement of the resonant frequency of the vibration propagation member according to the first embodiment;

FIG. 7 shows the effect of the thickness of the vibration propagation member on the resonant frequency according to the first embodiment;

FIGS. 8A and 8B show the effect of the gap distance between vertical partitions on the sensitivity according to the first embodiment;

FIGS. 9A-9C show, in comparison, the difference in resonant frequency between f1 and f2 and reception waveforms according to the first embodiment;

FIG. 10 is a schematic representation of a flowmeter/velocity meter according to the first embodiment;

FIG. 11 is a schematic representation of a concentration meter according to the first embodiment;

FIG. 12 is a cross-sectional view of a vibration propagation member according to a second embodiment, which is provided on one surface of a vibration means;

FIG. 13 illustrates a cross-sectional view of the vibration propagation member according to the second embodiment and a cross-sectional view of the vibration propagation member according to the second embodiment as taken along a line segment X;

FIGS. 14A-14D are cross-sectional views showing definitions of an internal pressure P1 and pressure P2 of a vibration propagation medium according to the second embodiment;

FIG. 15A is a cross-sectional view of a vibration propagation member according to the second embodiment;

FIG. 15B is an enlarged view of part A shown in FIG. 15A;

FIG. 16A is a cross-sectional view of another vibration propagation member according to the second embodiment;

FIG. 16B is an enlarged view of part B shown in FIG. 16A;

FIG. 17A is a cross-sectional view of another vibration propagation member according to the second embodiment;

FIG. 17B is an enlarged view of part C shown in FIG. 17A;

FIG. 18A is a cross-sectional view of another vibration propagation member according to the second embodiment;

FIG. 18B is an enlarged view of part D shown in FIG. 18A;

FIGS. 19A and 19B are partially enlarged cross-sectional views, covering a sidewall and vertical partitions, of the vibration propagation member according to the second embodiment;

FIGS. 20A-20D are perspective views illustrating the procedure of manufacturing the vibration propagation member according to the second embodiment;

FIG. 21 is a cross-sectional view of a vibration propagation member according to a third embodiment, which is provided on one surface of a vibration means;

FIG. 22 illustrates a cross-sectional view of the vibration propagation member according to the third embodiment and a cross-sectional view of the vibration propagation member according to the third embodiment as taken along a line segment X;

FIGS. 23A-23D are perspective views illustrating the procedure of manufacturing the vibration propagation member according to the third embodiment;

FIG. 24 is a cross-sectional view of a vibration transceiver according to a fourth embodiment; and

FIG. 25 is a set of cross-sectional views illustrating the procedure of manufacturing the vibration transceiver according to the fourth embodiment.

**Description of Embodiments**

(Basic idea that forms the basis of the present disclosure)

In those days when the present inventors conceived the concept of the present disclosure, the physical properties of a vibration propagation medium interposed between a fluid under measurement and a piezoelectric member for use as a vibration means needed to be controlled because a vibration such as an ultrasonic wave should be propagated efficiently through the fluid under measurement to measure the flow velocity, flow rate, and/or concentration of a combustible gas or dried air such as the air as the fluid under measurement.

Following is a physical interpretation of the vibration propagation member:

First of all, the product of density and sonic velocity that defines an acoustic impedance indicates the momentum of a substance that forms a micro unit element of the substance. Specifically, if the momentum of the substance that forms the micro unit element is $\Delta P$, its mass is $\Delta M$, and its velocity is V, then.

$$\Delta P \text{ (momentum)} = \Delta M \times V \text{ (acoustic impedance)} \qquad (1)$$

is satisfied according to the definition of momentum. Thus, it can be seen that the acoustic impedance is the momentum of the substance that forms the micro unit element.

Therefore, it can be seen that to efficiently propagate energy from a certain substance (as the source of generation of an ultrasonic wave) to an adjacent substance, their acoustic impedances are preferably as close as possible.

A phenomenon that occurs in an acoustic matching layer will be described based on these physical interpretations.

In general, the sonic velocity of a substance is given by

$$Va = (\kappa/\rho)\ 1/2 \qquad\qquad (2)$$

where $\kappa$ is a bulk modulus and $\rho$ is density. That is to say, the sonic velocity of a substance is determined uniquely by the bulk modulus and the density. Thus, it can be seen that it is difficult to control the sonic velocity intentionally.

That is why it is effective to reduce the density to decrease the acoustic impedance.

In the known art, a vibration propagation member of this type has been designed by modifying either its thickness or its shape and dimensions such as an outside diameter based on the sonic velocity in the propagation direction with the density reduced. In addition, most of the constituent materials for use in the vibration propagation member are either a single material or a substantially uniform composite material. That is why it has been difficult to partially control the characteristics of the vibration propagation member.

Furthermore, in the known art, supposing the vibration propagation medium is a high-temperature, high-humidity gas, moisture enters a hole or a through hole of the vibration propagation member to increase the apparent density of the vibration propagation member and thereby cause an increase in the acoustic impedance of the acoustic matching member. This causes a decline in the propagation efficiency of vibration into the vibration propagation medium. Consequently, this causes a decline in the performance of a measuring instrument such as a flowmeter or a concentration meter that uses the vibration propagation medium. In a worst-case scenario, this may prevent the measuring instrument from making measurements properly. These are problems with the related art.

The present inventors spotted these problems with the related art and conceived the subject-matter of the present disclosure to overcome the problems.

The present disclosure provides a vibration propagation member that allows a high degree of freedom of design and that may propagate given vibration with good stability and high accuracy for a long term, even when the vibration propagation medium is a high-temperature, high-humidity fluid. In addition, the present disclosure also provides a vibration transceiver formed by bonding such a vibration propagation member onto one surface of a vibration means. The present disclosure further provides a measuring instrument such as a flowmeter, a velocity meter, or a concentration meter, each including such a vibration transceiver.

Embodiments of the present disclosure will now be described in detail with reference to the accompanying drawings as needed. Note that unnecessarily detailed description will be omitted. For example, detailed description of already well-known matters and redundant description of substantially the same configuration will be omitted. This is done to avoid making the following description overly redundant and thereby help one of ordinary skill in the art understand the present disclosure easily.

It should also be noted that the accompanying drawings and the following description of embodiments are provided by the applicant to help one of ordinary skill in the art understand the present disclosure fully and only to give some examples of the present disclosure, and should not be construed as limiting the scope of the present disclosure, which is defined by the appended claims.

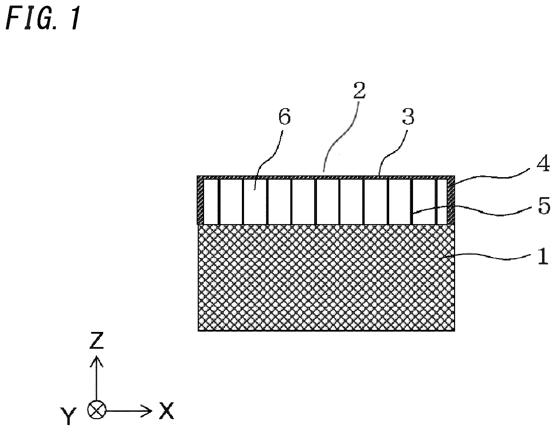

In the following description of embodiments, the three axes, namely, X-, Y-, and Z-axes, are shown for the sake of convenience on the drawings illustrating the shapes of constituent elements of the present disclosure and those embodiments will be described with reference to the X-, Y-, and Z-axes as needed. Also, in the following description of embodiments, when an ultrasonic transceiver is disposed to have the orientation shown in FIG. 1, the direction pointing from the left to the right on the paper on which FIG. 1 is drawn is supposed to be a positive X-axis direction, the direction pointing from the bottom to the top on the paper on which FIG. 1 is drawn is supposed to be a positive Z-axis direction, and the direction pointing from the recto to the verso of the paper on which FIG. 1 is drawn is supposed to be a positive Y-axis direction just for convenience sake. In addition, a dimension, measured parallel to the Z-axis, of each constituent element will be hereinafter referred to as its "thickness," the positive Z-axis direction will be hereinafter referred to as either "up" or "upward," and the negative Z-axis direction will be hereinafter referred to as either "down" or "downward." Note that such description using the X-, Y-, and Z-axes and upward and downward directions is made only for the sake of convenience to help one of ordinary skill in the art understand the present disclosure easily. The upward and downward directions are relative ones and subject to change depending on the orientation of the ultrasonic transceiver of the present disclosure disposed. Thus, the following description of embodiments with reference to these directions should not be construed as limiting the scope of the present disclosure.

(First embodiment)

A vibration propagation member according to a first embodiment, a vibration transceiver using the vibration propagation member, and a velocity meter, flowmeter, and concentration meter using the vibration transceiver will now be described with reference to FIGS. 1-11.

[1-1. Vibration propagation member]

[1-1-1. Configuration for vibration propagation member]

FIG. 1 is a cross-sectional view schematically illustrating an exemplary configuration for a vibration propagation member 2 according to the first embodiment which is provided on one surface of a vibration means 1. FIG. 1 illustrates a cross section of the vibration propagation member 2 as taken in the thickness direction (parallel to the Z-axis), i.e., a cross section thereof taken along an X-Z plane. As shown in FIG. 1, the vibration propagation member 2 is bonded to one surface of the vibration means 1 and vibrates as the vibration means 1 vibrates. The vibration propagation member 2 includes a top plate 3, a sidewall 4, and vertical partitions 5 arranged perpendicularly to the top plate 3. The spaces defined by the top plate 3, the vertical partitions 5, and the vibration means 1 may be hermetically sealed spaces 6. Depending on the intended use, the spaces may be hermetically sealed spaces. Alternatively, unless the vibration propagation medium includes a high-temperature, high-humidity liquid component, a through hole may be provided through the vertical partitions 5 such that the spaces serve as the vibration propagation spaces.

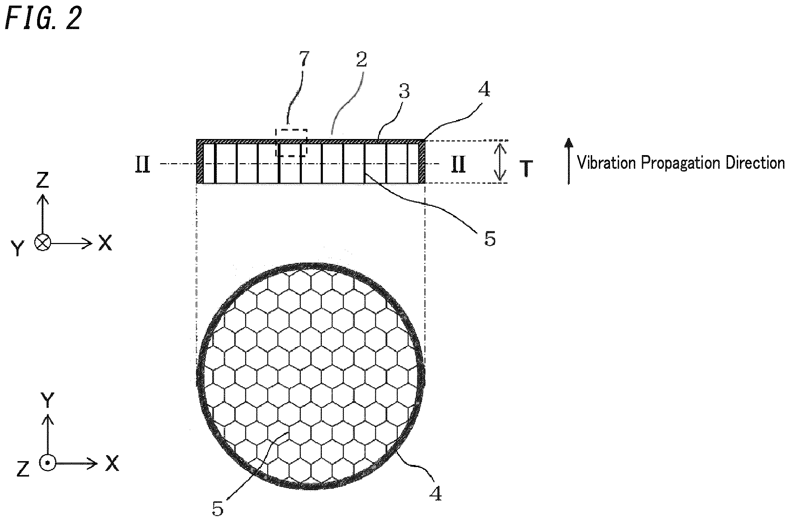

Next, the internal structure of the vibration propagation member 2 will be described with reference to FIG. 2. FIG. 2 is a cross-sectional view illustrating an exemplary configuration for the vibration propagation member 2 according to the first embodiment.

Note that the upper portion of FIG. 2 is a cross-sectional view of the vibration propagation member 2 taken in the thickness direction (parallel to the Z-axis), i.e., a cross-sectional view taken along an X-Z plane. On the other hand, the lower portion of FIG. 2 is a cross-sectional view of the vibration propagation member 2 as taken along the plane II-II shown in the upper portion of FIG. 2, i.e., a cross-sectional view of the vibration propagation member 2 as taken in a direction perpendicular to the thickness direction (parallel to an X-Y plane), or a cross-sectional view thereof taken along the X-Y plane. In FIG. 2, the reference sign T is the thickness of the vibration propagation member 2 as indicated by the double-headed arrow (which is parallel to the Z-axis). Note that the cross section of the vibration propagation member 2 as taken in the direction perpendicular to the thickness direction may include vertical partitions 5 which are arranged in a honeycomb pattern, for example, as shown in the lower portion of FIG. 2.

[1-1-2. Procedure of manufacturing vibration propagation member]

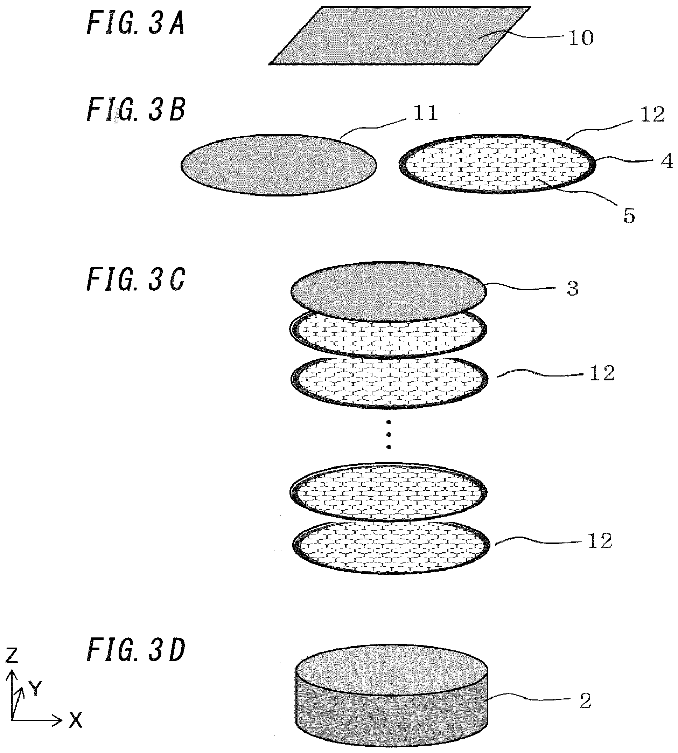

Next, a procedure of manufacturing the vibration propagation member 2 will be described with reference to FIG. 3.

FIGS. 3A-3D are perspective views illustrating the procedure of manufacturing the vibration propagation member 2 according to the first embodiment. The manufacturing process of the vibration propagation member 2 proceeds from the process step shown in FIG. 3A via the process steps shown in FIGS. 3B and 3C to the process step shown in FIG. 3D.

First, as shown in FIG. 3A, a plurality of metal plates 10, each of which is large enough to cut out a plurality of patterned structures therefrom, and a plurality of metal plates 10, each of which is large enough to cut out an individual patterned structure therefrom, are provided. FIG. 3A shows only one of those metal plates 10. Next, FIG. 3B shows a metal plate 11 which has been patterned into a circular shape to use the metal plate 10 as the top plate 3 and also shows a metal plate 12 on which the sidewall 4 and vertical partitions 5 of the vibration propagation member 2 have been formed by patterning. These metal plates 11, 12 may be formed either on an individual basis or simultaneously.

The metal plate 10 may be patterned by, for example, punching the metal plate 10 by pressing, etching the metal plate 10 by photolithography, subjecting the metal plate 10 to laser cutting, or subjecting the metal plate 10 to electrical discharge machining using a discharge wire. In this embodiment, the metal plate 11 patterned into the circular shape to use the metal plate 11 as the top plate 3 and the metal plate 12 on which those elements have been formed by patterning (hereinafter referred to as "patterned elements") are supposed to have been formed into a circular (disklike) external shape in top view (i.e., when viewed parallel to the Z-axis). However, this is only an example and should not be construed as limiting. Rather, the top plate 3 and the metal plate 12 having those patterned elements formed thereon according to the present disclosure do not have to have the circular (disklike) shape but may have an elliptical or polygonal shape as well.

Next, as shown in FIG. 3C, a plurality of the metal plates 12, on each of which those patterned elements have been formed, and the top plate 3 are sequentially stacked one on top of another while being aligned with each other. Specifically, first, a predetermined number of metal plates 12, each having those patterned elements formed thereon, are stacked one on top of another. Next, the top plate 3 is laid on top of the uppermost surface of the plurality of metal plates 12, each having those patterned elements formed thereon (i.e., on the surface, facing the positive Z-axis direction, of the metal plate 12 disposed at the top in the positive Z-axis direction and having those patterned elements formed thereon). Subsequently, those patterned metal plates are joined together, by diffusion joining, which is an exemplary direct joining technique, in a vacuum environment under heat and pressure to form an integral material. In the case of stainless steel, for example, the heating temperature during the diffusion joining process is about 1,000°C while stainless steel has a melting point of about 1500°C. Thus, when made of stainless steel, those metal plates 12 that are stacked one on top of another and the top plate 3 may be joined together by heating the metal plates 12 and the top plate 3 to this temperature in a vacuum under pressure with atoms on the junction interface allowed to diffuse and with the base metal not allowed to melt. Note that the diffusion joining requires some degree of planarity. Thus, depending on the process step shown in FIG. 3C, a posterior process step of removing bur and deformation from the metal plate 11 that has been patterned into the circular shape and the metal plates 12, each having those patterned elements formed thereon, may need to be performed after the process step shown in FIG. 3B has been performed.

Alternatively, a melt welding process for partially melting the base metal may also be used as another direct joining technique. In the case of stainless steel, the melt welding technique allows a plurality of metal plates to be joined together by heating the metal plates to around 1500°C. Still alternatively, according to another method for joining the metal plates, an epoxy resin or cyanoacrylate adhesive may also be used as a bonding material between the metal plates. Yet alternatively, if an inorganic material is selected as the bonding material, then brazing may also be used.

Performing this manufacturing procedure allows the vibration propagation member 2 according to the first embodiment, in which the respective patterned metal plates have been joined together by the joining method according to this embodiment, to be completed as shown in FIG. 3D. In this embodiment, the vibration propagation member is eventually formed to have a circular columnar external shape. However, this is only an example and should not be construed as limiting. Rather, the vibration propagation member according to the present disclosure does not have to have the circular columnar shape but may have an elliptic cylindrical shape or a polygonal prism shape as well.

[1-2. Vibration transceiver]

[1-2-1. Configuration for vibration transceiver]

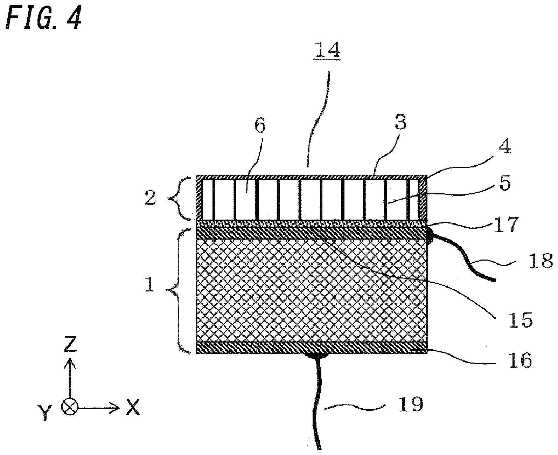

FIG. 4 is a cross-sectional view schematically illustrating an exemplary configuration for a vibration transceiver 14 according to the first embodiment. FIG. 4 illustrates a cross section of the vibration transceiver 14 as taken in the thickness direction (parallel to the Z-axis), i.e., a cross-sectional view taken along an X-Z plane.

As shown in FIG. 4, the vibration transceiver 14 includes: a vibration means 1 having one electrode 15 and the other electrode 16; the vibration propagation member 2 bonded to one surface of the vibration means 1; and lead wires 18, 19 respectively electrically connected to the electrodes 15, 16 of the vibration means 1.

[1-2-2. Procedure of manufacturing vibration transceiver]

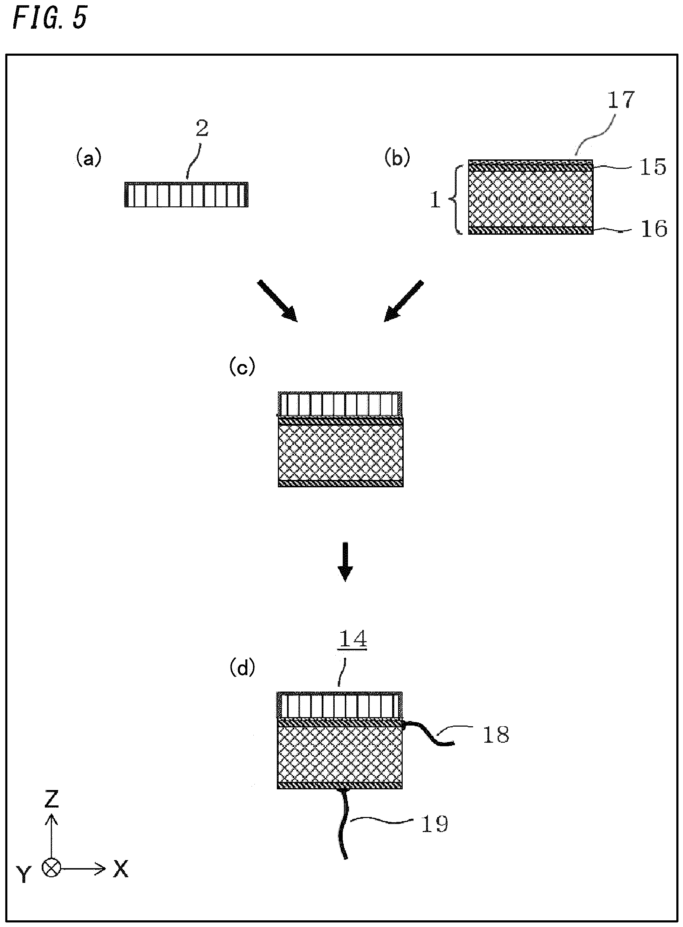

Next, a procedure of manufacturing the vibration transceiver 14 will be described with reference to FIG. 5.

FIG. 5 shows a set of cross-sectional views illustrating the procedure of manufacturing the vibration transceiver 14 according to the first embodiment. The manufacturing process of the vibration transceiver 14 proceeds from the process step shown in portion (a) of FIG. 5 via the process steps shown in portions (b) and (c) of FIG. 5 to the process step shown in portion (d) of FIG. 5.

Portion (a) of FIG. 5 is a cross-sectional view of the vibration propagation member 2 that has been described for the first embodiment. Portion (b) of FIG. 5 shows a cross section of the vibration means 1 which includes the one electrode 15 and the other electrode 16 and in which a bonding material 17 is applied onto the surface of the one electrode 15. The bonding material may be a general adhesive such as an epoxy adhesive, a phenol adhesive, or a cyanoacrylate adhesive. The bonding material may be a thermosetting adhesive, for example. The thermosetting adhesive may be any thermosetting resin without limitation. Examples of thermosetting resins include epoxy resins, phenol resins, polyester resins, and melamine resins. As the case may be, even a thermoplastic resin may also be used as long as the glass transition temperature thereof is equal to or lower than 70°C, which is the upper limit of the operating temperature thereof.

Portion (c) of FIG. 5 illustrates a state where the vibration means 1 and the vibration propagation member 2 are bonded together by causing a chemical reaction to any of these bonding materials 17. Portion (d) of FIG. 5 illustrates a state where the vibration transceiver 14 according to the first embodiment is completed by electrically bonding, by soldering, the one electrode 15 and the other electrode 16 of the vibration means 1 to the lead wires 18, 19, respectively.

[1-2-3. Operation and advantages of vibration transceiver]

Next, the operation and advantages of the vibration transceiver 14 will be described. In the following description, a piezoelectric vibrator is supposed to be used as an exemplary vibration means 1.

In the vibration transceiver 14, an electric pulse having either a sinusoidal wave or a square wave with a predetermined frequency is applied via the one lead wire 18 and the other lead wire 19 of the piezoelectric vibrator for use as the vibration means 1. This electric pulse causes the piezoelectric vibrator as the vibration means 1 to produce vibration. This vibration is transmitted to the top plate 3 via the vertical partitions 5 of the vibration propagation member 2. In this case, the vibration transmitted to the vibration propagation member 2 causes the vibration propagation member 2 to produce significant resonance by adjusting the shape of the vibration propagation member 2, the respective shapes of the top plate 3 of the vibration propagation member 2 and the vertical partitions 5 provided in the internal space of the sidewall 4, the thickness of the vertical partitions 5, the gap distance between the vertical partitions 5, the thickness of the sidewall 4, and the thickness T of the vibration propagation member 2. Consequently, the vibration may be transmitted efficiently to the vibration propagation medium such as a gas or a liquid to which the vibration should be transmitted. Thus, it can be seen that the characteristics of the vibration transceiver 14 may be controlled by adjusting a lot of design parameters (including the shape of the vibration propagation member 2, the shape of the vertical partitions 5, the thickness of the vertical partitions 5, the gap distance between the vertical partitions 5, the thickness of the sidewall 4, and the thickness T of the vibration propagation member 2), and therefore, the vibration propagation member 2 allows a high degree of freedom of design.

[1-2-4. Correlation between structure of vibration propagation member and characteristics of vibration transceiver]

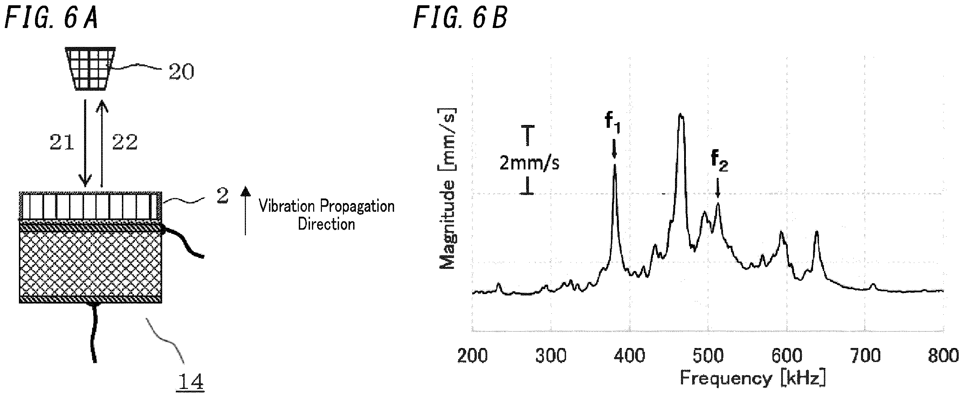

Next, the correlation between the structure of the vibration propagation member and the characteristics of the vibration transceiver will be described with reference to FIGS. 6A, 6B, 7, 8A, and 8B, and FIGS. 9A-9C.

FIG. 6A is a cross-sectional view illustrating an analysis state of a vibration produced by the vibration transceiver 14 according to the first embodiment of the present disclosure. FIG. 6B shows the result of the analysis. A method for analyzing the vibration will be described briefly with reference to FIG. 6A. With the vibration means 1 allowed to vibrate at a predetermined frequency, the vibration propagation member 2 is irradiated with a laser beam 21 emitted from a sensor head 20, and a variation in the frequency of a laser beam 22 reflected from the vibration propagation member 2 is detected. In this manner, the vibration velocity of the vibration transceiver 14 and displacement thereof (not shown) may be measured. FIG. 6B shows, as the result of analysis, the frequency and vibration velocity of the vibration propagation member 2.

This result reveals that the vibration propagation member 2 produces vibrations at multiple points while the vibration means 1 produces a vibration. Vibrations produced in the same direction as the vibration propagation direction were extracted from these vibrations. As a result, the result of analysis (to be described later) revealed that a first vibration f1 indicates the form of vibration of the vibration propagation member 2 in the thickness direction while a second vibration f2 indicates a characteristic vibration induced by membrane structures 7, each defined by the gap distance between the vertical partitions 5 and the thickness of the top plate 3, with respect to the vibration of the vibration means 1. Note that although other peaks of vibrations were also observable, those vibrations turned out to be a form of vibrations different from the vibration propagation direction of the vibration transmitted to the vibration propagation medium, and therefore, detailed description thereof will be omitted herein.

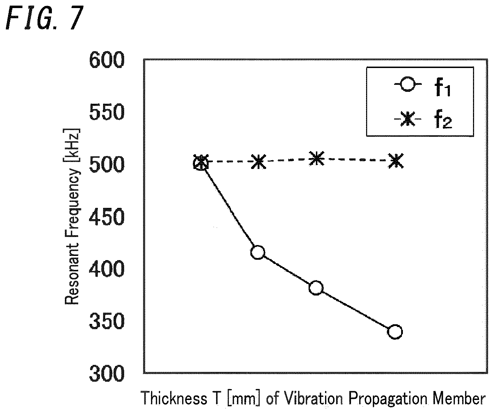

FIG. 7 shows the effect of the thickness of the vibration propagation member on the respective resonant frequencies of the first vibration f1 and the second vibration f2. As for the first vibration f1, the resonant frequency thereof changes with the thickness of the vibration propagation member, which suggests that the resonant frequency is derived from the form of vibration in the vibration propagation direction. Thus, the resonant frequency of the first vibration f1 may be controlled by adjusting the thickness of the vibration propagation member. As for the second vibration f2, on the other hand, the resonant frequency thereof does not change with the thickness T of the vibration propagation member.

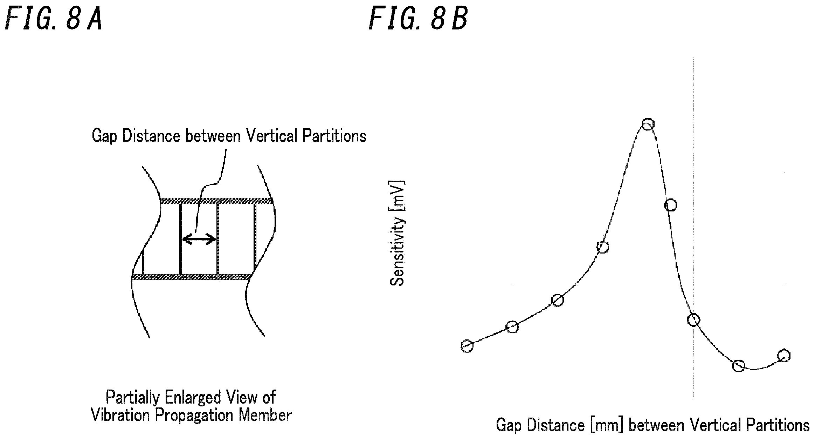

FIGS. 8A and 8B show how the gap distance between the vertical partitions 5 is correlated with the sensitivity indicating the efficiency with which vibration propagates to the vibration propagation medium. As for the second vibration f2, the vibration propagation efficiency thereof has a local maximum value that varies according to the gap distance between the vertical partitions 5. This is the characteristic vibration induced by the membrane structures 7, each defined by the gap distance between the vertical partitions 5 and the thickness of the top plate 3 as opposed to the vibration frequency of the piezoelectric member for use as the vibration means 1. Changing the gap distance between the vertical partitions 5 would have caused the membrane structures 7 to produce significant resonance while the vibration means 1 produced a vibration, thus causing the sensitivity to reach a local maximum value. That is to say, as for this second vibration f2, the resonant frequency thereof may be controlled by adjusting the parameters of the membrane structures 7 defined by the vertical partitions 5 and the top plate 3 such as the gap distance between the vertical partitions 5, the thickness of the top plate, and the thickness of the vertical partitions 5.

As can be seen from the foregoing description, in the vibration propagation member according to this embodiment, the first vibration f1 and the second vibration f2 are mutually different forms of vibrations and may be controlled independently of each other by changing different structural factors of the vibration transceiver 14. Next, it will be described that the vibration propagation waveform may be controlled by using these two vibrations (namely, the first vibration f1 and the second vibration f2) in combination while taking advantage of this characteristic.

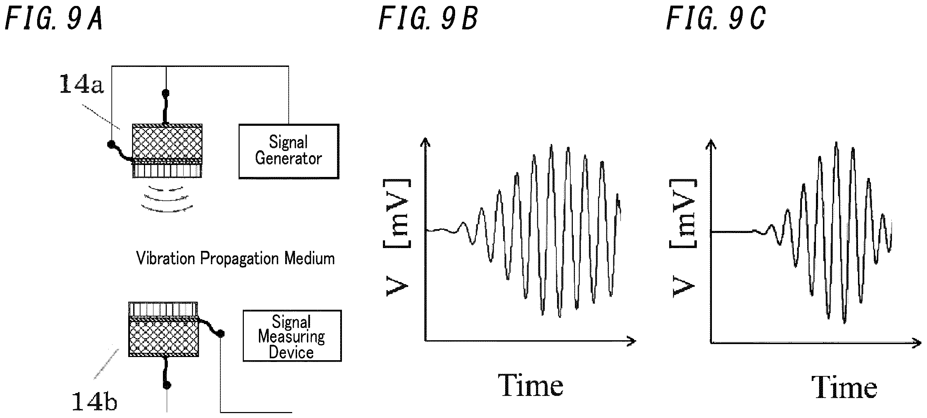

FIG. 9A is a cross-sectional view showing a method for measuring a vibration propagation waveform. When a transmission wave generator transmits a transmission pulse wave to a vibration transceiver 14a, the vibration means of the vibration transceiver 14a produces a vibration at a frequency corresponding to the transmission pulse. This vibration causes the vibration propagation member to produce resonance. As a result, amplified vibration propagates through the vibration propagation medium. When the vibration propagating reaches a vibration transceiver 14b disposed at a certain distance, the vibration propagation member of the vibration transceiver 14b produces resonance. This vibration causes the vibration means to produce a vibration. Then, the vibration is transformed by the vibration means into an electrical signal. As a result, the vibration propagating through the vibration propagation medium to a reception wave instrument may be measured by the reception wave instrument.

FIG. 9B shows reception waveforms detected by the method for measuring the oscillatory waveform shown in FIG. 9A. Specifically, FIG. 9B shows the reception waveform in a situation where the difference (f2 - f1) in resonant frequency when the first vibration f1 has a frequency of 485 kHz and the second vibration f2 has a frequency of 515 kHz is set at 30 kHz by controlling the structure of the vibration propagation member 2 according to the present disclosure. FIG. 9C shows the reception waveform in a situation where the difference (f2 - f1) in resonant frequency when the first vibration f1 has a frequency of 460 kHz and the second vibration f2 has a frequency of 540 kHz is set at 80 kHz by controlling the structure of the vibration propagation member 2 according to the present disclosure. If the amplitude of the waveform (i.e., sensitivity) needs to be as large as possible, the measuring system adopted from various measuring systems may be designed to have the reception waveform shown in FIG. 9B. On the other hand, if the number of waves needs to be as small as possible, then the measuring system adopted from various measuring systems may be designed to have the reception waveform shown in FIG. 9C. Determining the supposed reception waveform and changing the structure of the vibration propagation member 2 according to the type of the system required makes the vibration propagation member 2 compatible with any of various types of measuring systems. Using the vibration propagation member according to this embodiment makes the respective resonant frequencies of the first vibration f1 and the second vibration f2 controllable independently of each other. Thus, the vibration propagation waveform may also be designed with a relatively high degree of freedom by using the vibration propagation member 2 according to this embodiment.

[1-2-5. Advantages]

As can be seen from the foregoing description, the vibration transceiver 14 according to this embodiment includes the vibration means 1 and the vibration propagation member 2 configured to operate by being bonded to one surface of the vibration means 1. The vibration propagation member 2 includes the top plate 3, the sidewall 4, and the vertical partitions 5 arranged perpendicularly to the top plate 3. Thus, vibration transceiver 14 may control the first vibration (f1) as a vibration produced in the same direction as the vibration propagation direction by adjusting the thickness of the vibration propagation member 2 as a constituent element of the vibration propagation member 2. In addition, the vibration transceiver 14 may also control, independently of the first vibration (f1), the second vibration (f2) produced by the membrane structures 7 defined by the thickness of the vertical partitions, the gap distance between the vertical partitions, the thickness of the top plate, and other parameters. The vibration transceiver 14 in which the vibration propagation member 2 is bonded to the vibration means 1 may freely control the frequency of the vibration to transmit and receive. Consequently, a vibration propagation member 2 that allows a high degree of freedom of design may be provided.

In addition, making the spaces defined by the top plate 3, the vertical partitions 5, and the vibration means 1 hermetically sealed spaces 6 allows the vibration transceiver 14 to operate with good stability even when the vibration transceiver 14 is exposed to either a corrosive environment or a high-temperature, high-humidity environment.

[1-3. Velocity meter or flowmeter]

[1-3-1. Configuration for velocity meter or flowmeter]

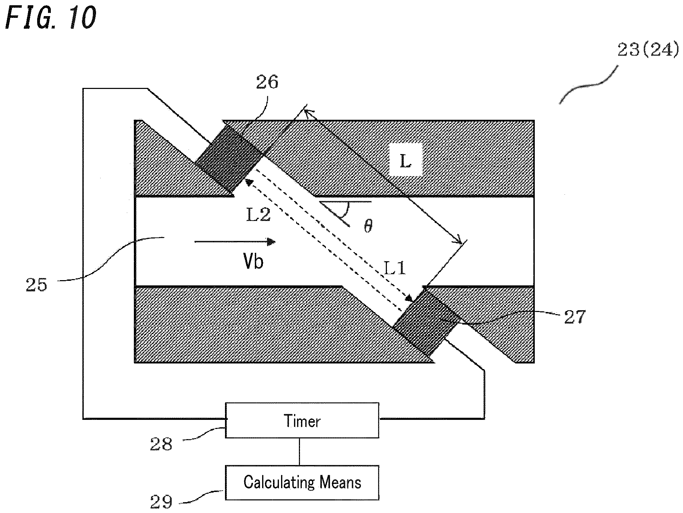

Next, a flowmeter according to this embodiment will be described with reference to FIG. 10. Note that although the following description will be focused on the flowmeter 23, almost the same statement is applicable to a velocity meter 24 as well. In that case, the same statement applies by replacing the "flow rate" in the following description with a "flow velocity." Alternatively, the measuring instrument shown in FIG. 10 may be a measuring instrument with the ability to measure both flow rate and flow velocity as well.

FIG. 10 is a block diagram schematically illustrating an exemplary configuration for the flowmeter 23 according to the first embodiment.

In the flowmeter 23 according to the first embodiment, an oscillatory frequency range in which the vibration is transmitted and received is supposed to be an ultrasonic range, for example, the vibration transceiver is supposed to be an ultrasonic transceiver for transmitting and receiving an ultrasonic wave, and the flowmeter will be hereinafter referred to as an "ultrasonic flowmeter."

As shown in FIG. 10, the flowmeter 23 according to this embodiment has a configuration in which a pair of ultrasonic transceivers 26, 27, each having the configuration of the vibration transceiver according to the first embodiment described above, are arranged to face each other and respectively provided at an upstream point and a downstream point of a flow channel 25, through which a fluid flows. In the flow channel 25, the directions in which the fluid flows are indicated by the arrows. On the paper on which FIG. 10 is drawn, the left-hand side indicates an upstream part of the flow channel 25 and the right-hand side indicates a downstream part of the flow channel 25. The reference sign L1 indicated by the dotted arrow in FIG. 4 indicates the propagation path of the vibration that propagates from the ultrasonic transceiver 26 disposed at the upstream point toward the ultrasonic transceiver 27. The reference sign L2 indicated by the dotted arrow in FIG. 4 indicates the propagation path of the vibration that propagates from the ultrasonic transceiver 27 disposed at the downstream point toward the ultrasonic transceiver 26. The flowmeter 23 according to this embodiment further includes: a timer 28, to which the ultrasonic transceivers 26, 27 are connected and which measures the time of appearance of the vibration from one of the ultrasonic transceivers 26, 27 to the other of the ultrasonic transceivers 26, 27; and a calculating means 29, to which the timer 28 is connected and which calculates the flow rate of the fluid flowing through the flow channel 25 based on the time of appearance of the ultrasonic wave that has been measured by the timer 28.

Note that if the measuring instrument shown in FIG. 10 is implemented as a velocity meter 24, then the velocity meter 24 may have the same configuration as the flowmeter 23 but the calculating means 29 calculates, based on the time of appearance of the ultrasonic wave that has been measured by the timer 28, the flow velocity of the fluid flowing through the flow channel 25. Alternatively, the calculating means 29 may also be configured to calculate both the flow velocity and flow rate of the fluid flowing through the flow channel 25.

[1-3-2. Measuring operation performed by velocity meter or flowmeter]

Suppose the flow velocity of the fluid flowing through the flow channel 25 is Vb, the velocity of the ultrasonic wave in the fluid is C (not shown), and the angle formed between the direction in which the fluid flows and the vibration propagation direction is $\theta$. In that case, the propagation time t1 it takes for a vibration emitted from the ultrasonic transceiver 26 to reach the ultrasonic transceiver 27 in a situation where the ultrasonic transceiver 26 is used as an ultrasonic transmitter and the ultrasonic transceiver 27 is used as an ultrasonic receiver is given by the following Equation (3):

$$t1 = L/(C + Vb \cdot \cos\theta) \qquad (3).$$

On the other hand, the propagation time t2 it takes for a vibration pulse emitted from the ultrasonic transceiver 27 to reach the ultrasonic transceiver 26 is given by the following Equation (4):

$$t2 = L/(C - Vb \cdot \cos\theta) \qquad (4).$$

The following Equation (5) is obtained by eliminating the sonic velocity C of the fluid from both of these Equations (3) and (4):

$$Vb = L/2\cos\theta \, (1/t1 - 1/t2) \qquad (5).$$

If L and $\theta$ are known, then the flow velocity Vb may be determined by making the timer 28 measure t1 and t2. In addition, the flow rate Q may be determined by making the calculating means 29 multiply the flow velocity Vb by a cross-sectional area S and a coefficient of correction K. The calculating means 29 in the flowmeter 23 calculates the flow rate Q by the equation $Q = K \cdot S \cdot Vb$.

[1-3-3. Advantages of velocity meter or flowmeter]

As can be seen from the foregoing description, the vibration transceiver 14 according to this embodiment includes the vibration means 1 and the vibration propagation member 2 configured to operate by being bonded to one surface of the vibration means 1. The vibration propagation member 2 includes the top plate 3, the sidewall 4, and the vertical partitions 5 arranged perpendicularly to the top plate 3. Thus, vibration transceiver 14 may control the first vibration (f1) as a vibration produced in the same direction as the vibration propagation direction by adjusting the thickness of the vibration propagation member 2 as a constituent element of the vibration propagation member 2. In addition, the vibration transceiver 14 may also control, independently of the first vibration (f1), the second vibration (f2) produced by the membrane structures 7 defined by the thickness of the vertical partitions, the gap distance between the vertical partitions, the thickness of the top plate, and other parameters. The vibration transceiver 14 in which the vibration propagation member 2 is bonded to the vibration means 1 may freely control the frequency of the vibration to transmit and receive. Consequently, a vibration propagation member 2 that allows a high degree of freedom of design may be provided. This allows a vibration transceiver suitable for use as a velocity meter or a flowmeter to be provided easily, thus enabling measuring the flow velocity and flow rate with both high accuracy and good stability.

In addition, making the spaces defined by the top plate 3, the vertical partitions 5, and the vibration means 1 hermetically sealed spaces 6 allows the flow velocity and flow rate to be measured directly even when the fluid under measurement is either a corrosive fluid or a high-temperature, high-humidity fluid.

[1-4. Concentration meter]

[1-4-1. Configuration and measuring principle of concentration meter]

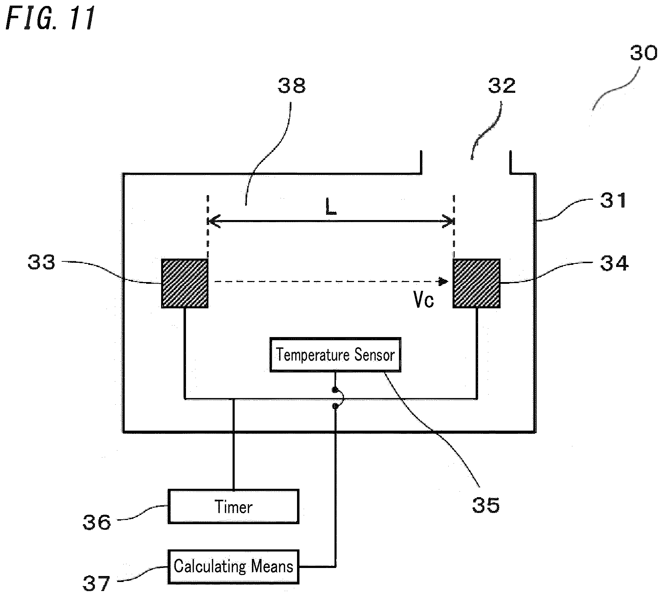

Next, it will be described with reference to FIG. 11 how a concentration meter operates to measure the concentration of a gas using an ultrasonic wave.

FIG. 11 is a schematic cross-sectional view of a concentration meter 30 according to an embodiment of the present disclosure. The concentration meter 30 is implemented as an ultrasonic concentration meter in which an oscillatory frequency range where the vibration is transmitted and received is supposed to be an ultrasonic range, for example, and in which the vibration transceiver 14 is supposed to be used as each of ultrasonic transceivers 33, 34 for transmitting and receiving an ultrasonic wave.

The concentration meter 30 has a housing 31 having a space where the concentration of a gas is measured. The housing 31 has a vent hole 32 through which a fluid under measurement is allowed to pass. A concentration measuring space in the housing 31 is supposed to have, for example, a rectangular parallelepiped shape or a circular cylindrical shape. The concentration measuring space does not have to be entirely surrounded with the walls of the housing 31 in all directions but has only to be a space in which an ultrasonic wave may be transmitted and received. For example, the housing 31 may be partially cut out and the concentration measuring space may be opened to the external environment in the cutout portion.

In the concentration meter 30, the pair of ultrasonic transceivers 33, 34 are arranged inside the housing 31 to face each other, and a temperature sensor 35 is also housed inside the housing 31. The concentration meter 30 is connected to a timer 36 and a calculating means 37. When used as an ultrasonic transmitter, the ultrasonic transceiver 33 transmits the ultrasonic wave in accordance with the operation of the timer 36. In that case, the ultrasonic transceiver 34 serves as an ultrasonic receiver. The ultrasonic wave transmitted from the ultrasonic transceiver 33 propagates through the fluid under measurement that fills the inside of the housing 31. The ultrasonic transceiver 34 for use as an ultrasonic receiver receives the ultrasonic wave. The timer 36 determines the propagation velocity Vc of the ultrasonic wave based on the propagation time it takes for the ultrasonic wave transmitted to be received and a predetermined propagation distance L of the ultrasonic wave.

The propagation velocity Vc of the ultrasonic wave propagating through a mixed gas as the fluid under measurement is determined by the average molecular weight M, heat capacity ratio $\gamma$, gas constant R, and absolute temperature T (K) of the mixed gas as expressed by the following Equation (6). The average molecular weight may be determined by measuring the sonic velocity and the temperature.

$$\mathrm{Vc} = \gamma \cdot \mathrm{R} \cdot \mathrm{T/M} \qquad (6).$$

If the gas component in the mixed gas is known, then the average molecular weight M may be determined by measuring the gas temperature T and the propagation velocity Vc and the gas concentration may be calculated based on the average molecular weight M. In the case of an ideal gas as a two-species mixture (i.e., a mixture of gas (a) and gas (b)), the concentration may be calculated by the following Equation (7):

$$\text{Concentration (\%) of gas (a)} = M - mb/ma - mb \times 100 \qquad (7)$$

where ma and mb are respective molecular weights of gas (a) and gas (b).

[1-4-2. Advantages of concentration meter]

As can be seen from the foregoing description, the vibration transceiver 14 according to this embodiment includes the vibration means 1 and the vibration propagation member 2 configured to operate by being bonded to one surface of the vibration means 1. The vibration propagation member 2 includes the top plate 3, the sidewall 4, and the vertical partitions 5 arranged perpendicularly to the top plate 3. Thus, vibration transceiver 14 may control the first vibration (f1) produced as a vibration in the same direction as the vibration propagation direction by adjusting the thickness of the vibration propagation member 2 as a constituent element of the vibration propagation member 2. In addition, the vibration transceiver 14 may also control, independently of the first vibration (f1), the second vibration (f2) produced by the membrane structures 7 defined by the thickness of the vertical partitions, the gap distance between the vertical partitions, the thickness of the top plate, and other parameters. The vibration transceiver 14 in which the vibration propagation member 2 is bonded to the vibration means 1 may freely control the frequency of the vibration to transmit and receive. Consequently, a vibration propagation member 2 that allows a high degree of freedom of design may be provided. This allows a vibration transceiver suitable for use as a concentration meter to be provided easily, thus enabling measuring the flow velocity and flow rate with both high accuracy and good stability.
In addition, making the spaces defined by the top plate 3, the vertical partitions 5, and the vibration means 1 hermetically sealed spaces 6 allows the concentration to be measured directly even when the fluid under measurement is either a corrosive fluid or a high-temperature, high-humidity fluid.

(Second embodiment)

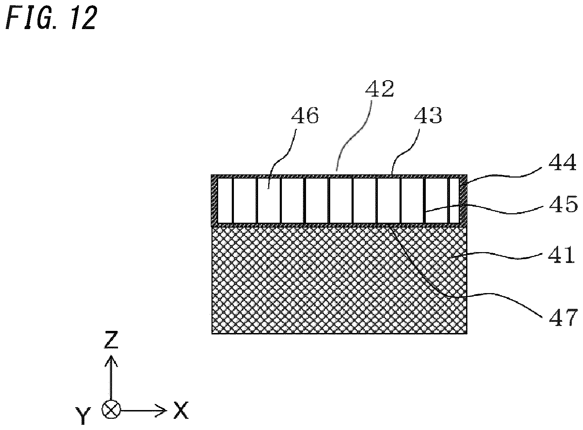

A vibration propagation member according to a second embodiment and a vibration transceiver using the vibration propagation member will now be described with reference to FIGS. 12-20D.

[2-1. Vibration propagation member]

[2-1-1. Configuration for vibration propagation member]

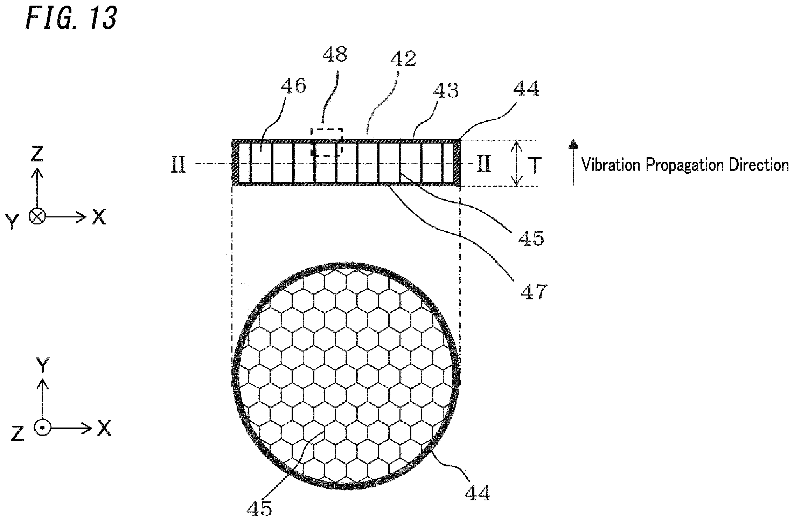

FIG. 12 is a cross-sectional view schematically illustrating an exemplary configuration in which a vibration propagation member 42 according to the second embodiment is provided on one surface of a vibration means 41. FIG. 12 illustrates a cross section of the vibration propagation member 42 as taken in the thickness direction (parallel to the Z-axis), i.e., a cross section thereof taken along an X-Z plane. As shown in FIG. 12, the vibration propagation member 42 is bonded to one surface of the vibration means 41 and vibrates as the vibration means 41 vibrates. The vibration propagation member 42 includes a top plate 43, a sidewall 44, and vertical partitions 45 arranged perpendicularly to the top plate 43. The spaces defined by the top plate 43, the vertical partitions 45, and the vibration means 41 may be hermetically sealed spaces 46. Depending on the intended use, the spaces may be hermetically sealed spaces 46. Alternatively, unless the vibration propagation medium includes a high-temperature, high-humidity liquid component, a through hole may be provided through the vertical partitions 45 such that the spaces serve as the vibration propagation space.
Next, the internal structure of the vibration propagation member 42 will be described with reference to FIG. 13. FIG. 13 is a cross-sectional view illustrating an exemplary configuration for the vibration propagation member 42 according to the second embodiment.
Note that the upper portion of FIG. 13 is a cross-sectional view of the vibration propagation member 42 taken in the thickness direction (parallel to the Z-axis), i.e., a cross-sectional view taken along an X-Z plane. On the other hand, the lower portion of FIG. 13 is a cross-sectional view of the vibration propagation member 42 as taken along the plane II-II shown in the upper portion of FIG. 13, i.e., a cross-sectional view of the vibration propagation member 42 as taken in a direction perpendicular to the thickness direction (parallel to an X-Y plane), or a cross-sectional view thereof taken along the X-Y plane. In FIG. 13, the reference sign T is the thickness of the vibration propagation member 2 as indicated by the double-headed arrow (which is parallel to the Z-axis). Note that the cross section of the vibration propagation member 42 as taken in the direction perpendicular to the thickness direction may include vertical partitions 45 which are arranged in a honeycomb pattern, for example, as shown in the lower portion of FIG. 13.

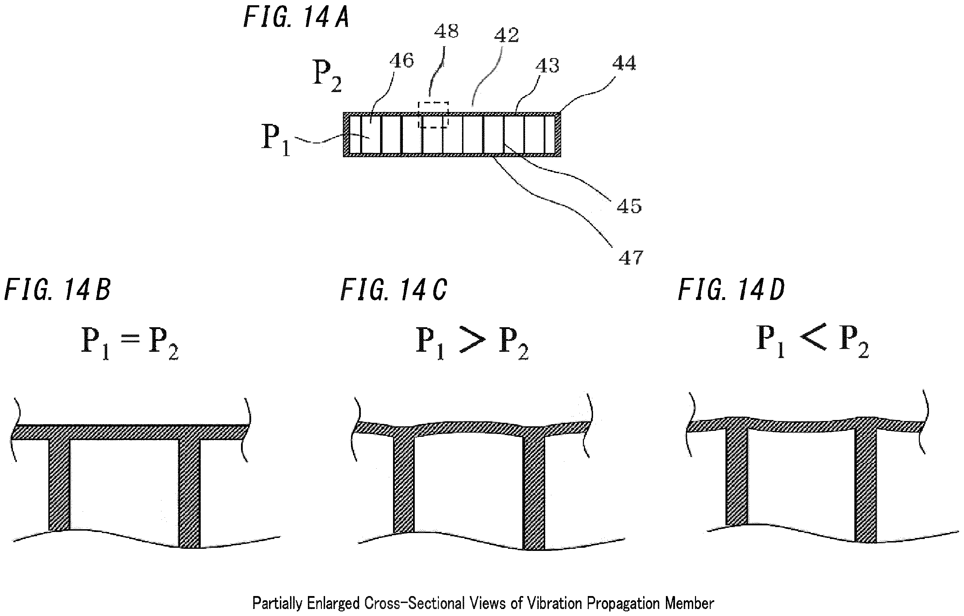

Next, the hermetically sealed spaces 46 defined by the top plate 43, the sidewall 44, and the vertical partitions 45, arranged perpendicularly to the top plate 43, of the vibration propagation member 42 according to the second embodiment will be described with reference to FIGS. 14A-14D.

FIG. 14A is a cross-sectional view of the vibration propagation member 42 according to the second embodiment. FIG. 14B is a partially enlarged cross-sectional view of the vibration propagation member 2 in a situation where the internal pressure P1 of one of the hermetically sealed spaces 46 of the vibration propagation member 42 is as high as the pressure P2 of the vibration propagation medium. FIG. 14C is a partially enlarged cross-sectional view of the vibration propagation member 2 in a situation where the internal pressure P1 of the hermetically sealed space 46 is higher than the pressure P2 of the vibration propagation medium. FIG. 14D is a partially enlarged cross-sectional view of the vibration propagation member 2 in a situation where the internal pressure P1 of the hermetically sealed space 46 is lower than the pressure P2 of the vibration propagation medium.

If P1 = P2 is satisfied as shown in FIG. 14B, then the vibration of the membrane structure 48 is not regulated by the pressure, thus making the sensitivity sufficiently high. For example, in a situation where a target parameter of the vibration propagation medium such as the pressure of the vibration propagation medium inside a high-pressure pipe is apparent, the efficiency of propagation of vibration into the vibration propagation medium may be improved and stabilized vibration propagation performance is ensured by setting the internal pressure of the hermetically sealed spaces 46 of the vibration propagation member 42 as high as the pressure of the propagation medium.

If P1 > P2 is satisfied as shown in FIG. 14C, then the top plate has a raised shape. In that case, while measurement is made on a high-temperature, high-humidity fluid, liquid droplets are less likely to be collected on the vibrating surface of the top plate even with condensation formed due to high humidity. As a result, the efficiency of propagation of vibration into the vibration propagation medium may be improved with good stability and stabilized vibration propagation performance is ensured even in a high-humidity environment.

If P1 < P2 is satisfied as shown in FIG. 14D, then the top plate has a recessed shape. In that case, the efficiency of propagation of vibration into the vibration propagation medium improves due to sound collection effect. Optionally, a vacuum may be created inside the vibration propagation member 42. Then, the flexure of the top plate may be reduced. In addition, the top plate 43 is regulated by the pressure, thus reducing the chances of causing reverberation, i.e., the chances of the vibration of the vibration propagation member 42 remaining unintentionally.

The inside of this hermetically sealed space 46 may be filled with an inert gas such as an argon gas (Ar), a nitrogen gas ($N_2$), or a helium gas (He). This may reduce the internal corrosion of the vibration propagation member 42.

Optionally, a high-viscosity liquid may be injected into some of the hermetically sealed spaces 46. In that case, damping effect that reduces the vibration at a predetermined frequency would be achieved by changing the viscosity of the liquid. This makes the vibration propagation efficiency improvable selectively only at a target oscillatory frequency.

Next, some specific implementations of vertical partitions 45 having mutually different cross-sectional shapes for the vibration propagation member 42 according to this second embodiment and the advantages achieved by them will be described.

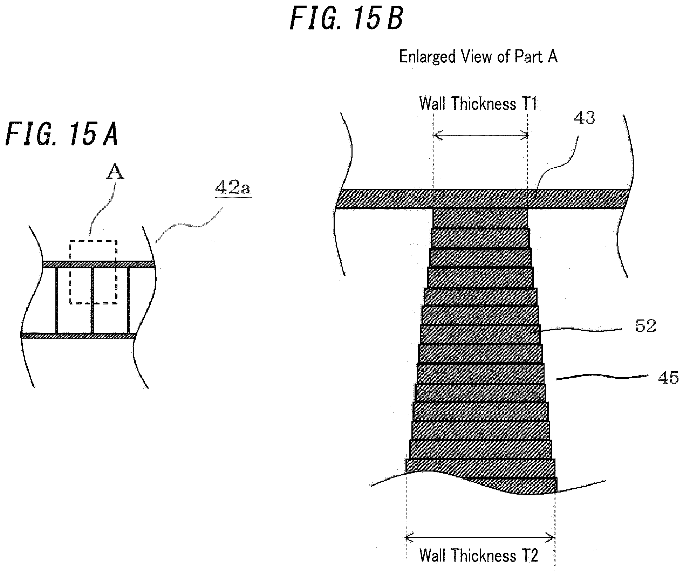

FIG. 15B is a cross-sectional view illustrating, on a larger scale, part A of the vibration propagation member 42a shown in FIG. 15A as a first implementation of the second embodiment. In FIG. 15B, the vertical partition 45 has a structure in which multiple patterned metal plates 52 are stacked one on top of another on the top plate 43 of the vibration propagation member 42a. In this structure, the wall thickness of the stack of these patterned metal plates 52 may vary from T1 through T2. This allows the internal structure of the vibration propagation member 42a to have parts with relatively high mechanical strength and parts with relatively low mechanical strength.

Setting the wall thickness of the vertical partition 45 of the vibration propagation member 42a at a relatively large value in the vicinity of the bottom plate 47 and at a relatively small value in the vicinity of the top plate 43 as shown in FIG. 15B allows the vibration of the vibration means 41 to propagate and be transmitted efficiently in the vicinity of the bottom plate 47 of the vibration propagation member 42a. In addition, setting the wall thickness of the vertical partition 45 at a relatively small value (at a wall thickness T1) in the vicinity of the top plate 43 and increasing the wall thickness of the vertical partition 45 toward the bottom surface (toward a wall thickness T2) allows the membrane structure 48 of the top plate 43 to vibrate efficiently, thus improving the efficiency of propagation of the vibration into the propagation medium.

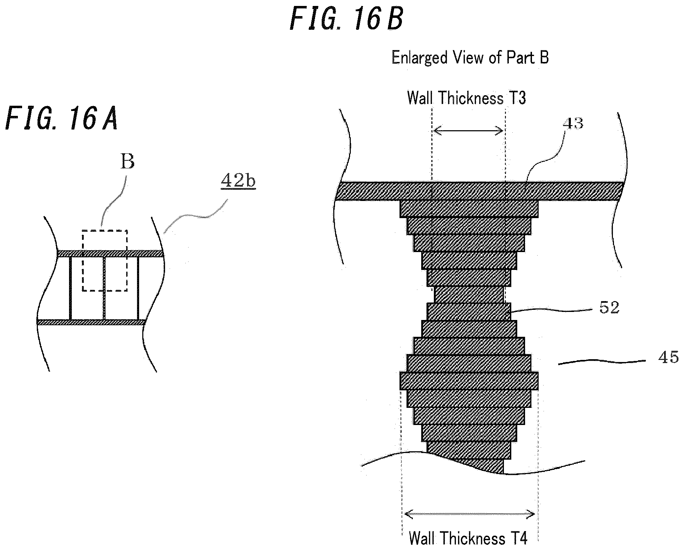

FIG. 16B is a cross-sectional view illustrating, on a larger scale, part B of the vibration propagation member 42b shown in FIG. 16A as a second implementation of the second embodiment. As shown in FIG. 16B, the wall thickness of the vertical partition 45 may vary in the vibration propagation direction to change gradually and increase and decrease alternately and repeatedly.

Setting the wall thickness of a particular part of the vertical partition 45, corresponding to a peak of the vibration transmitted through the vertical partition 45 of the vibration propagation member 42, at a relatively large value allows only the vibration at a target frequency to be reduced selectively. In addition, the vertical partition 45 serves as a very important column for transmitting the vibration of the vibration propagation member 42b. Letting a particular part of the vibration propagation member 42b have a wall thickness with a low mechanical strength (corresponding to a wall thickness T3) causes an increase in the vibration damping rate of the vibration propagation member 42b. This would achieve the effect of letting the reverberation fade away quickly. In addition, this would also achieve the effect of setting up the vibration promptly.

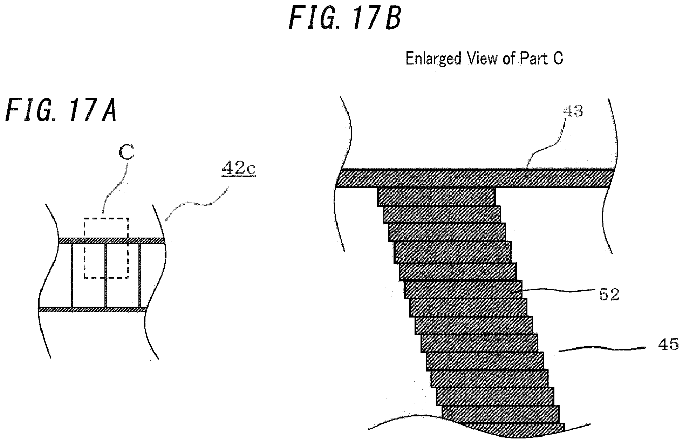

FIG. 17B is a cross-sectional view illustrating, on a larger scale, part C of the vibration propagation member 42c shown in FIG. 17A as a third implementation of the second embodiment. As shown in FIG. 17B, a plurality of patterned metal plates 52 may be stacked one on top of another to slightly shift from each other and thereby form a vertical partition 45 with an inclined pattern. As a result, the vertical partition 45 may be formed obliquely. This may extend the propagation path of the vibration and delay the time of appearance of the vibration, thus enabling controlling the sonic velocity.

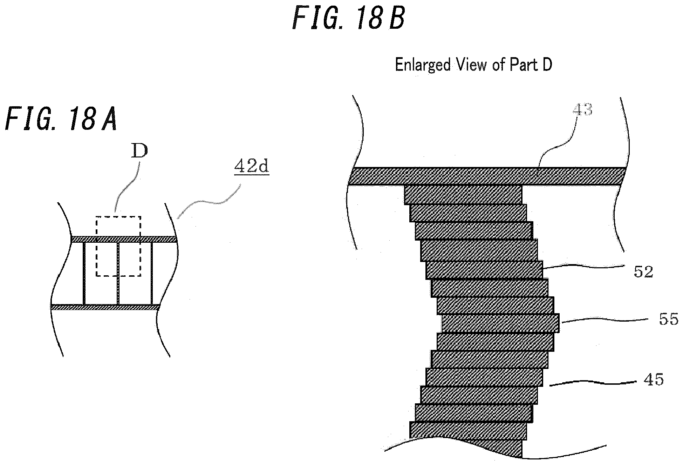

FIG. 18B is a cross-sectional view illustrating, on a larger scale, part D of the vibration propagation member 42d shown in FIG. 18A as a fourth implementation of the second embodiment.

Forming a V-pattern with a bent portion 55 by slighting shifting a plurality of patterned metal plates 52 that are stacked one on top of another to form the vertical partition 45 imparts flexibility to the vibration propagation member 42d and causes an increase in the vibration damping rate of the vibration propagation member 42d. This would achieve the effect of letting the reverberation fade away quickly.

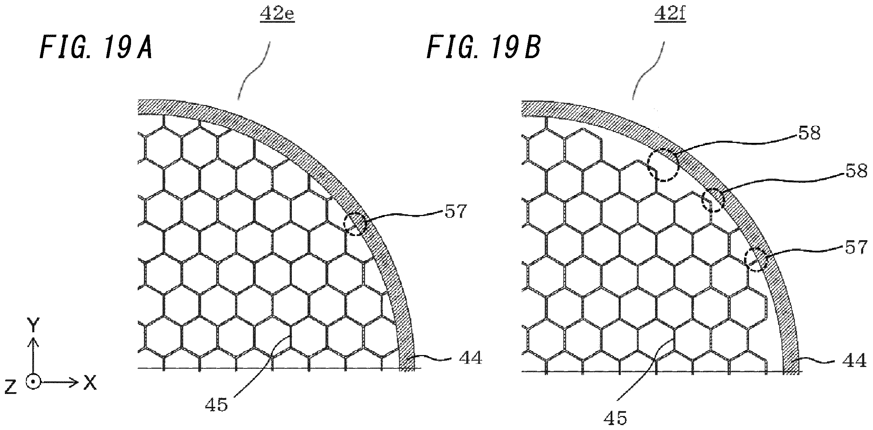

FIGS. 19A and 19B are cross-sectional views each illustrating, on a larger scale, a part covering a sidewall and vertical partitions of a vibration propagation member according to a fifth implementation of the second embodiment.

The vibration propagation member 42e shown in FIG. 19A includes only vertical partitions 57 arranged in contact with the sidewall 44. On the other hand, the vibration propagation member 42f shown in FIG. 19B includes both vertical partitions 57 arranged in contact with the sidewall 44 and vertical partitions 58 arranged out of contact with the sidewall 44. Such a structure may reduce the number of vibration propagation paths formed by the vertical partitions 57 and the sidewall 44 to cause unnecessary vibrations perpendicularly to the vibration propagation direction, thus reducing such unnecessary vibrations.

[2-1-2. Procedure of manufacturing vibration propagation member]

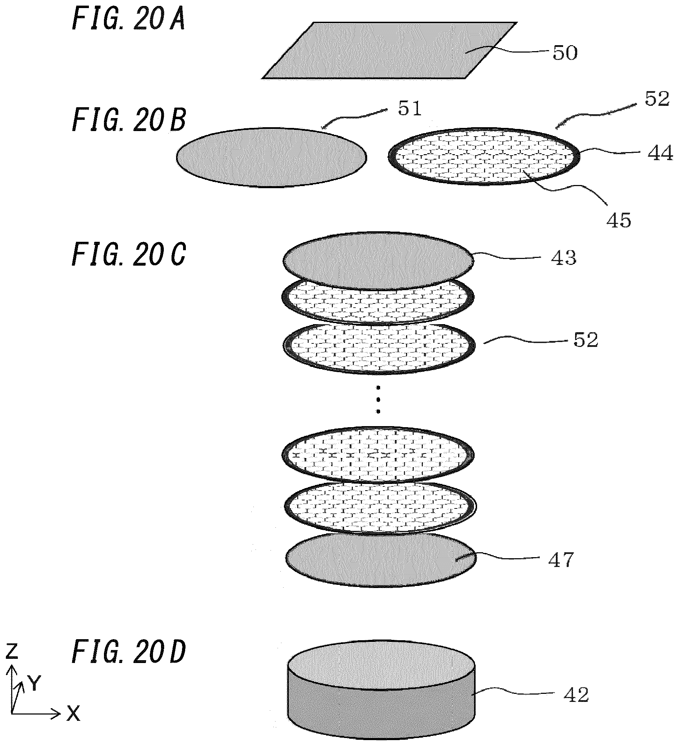

Next, a procedure of manufacturing the vibration propagation member will be described with reference to FIGS. 20A-20D. Note that although the vibration propagation members are designated by the reference signs 42a-42f to be distinguished from each other due to their difference in the shape of vertical partitions in the foregoing description, the vibration propagation members will be collectively designated by the reference sign 42 because there is no need to distinguish the vibration propagation members from each other in the following description.

FIGS. 20A-20D are perspective views illustrating the procedure of manufacturing the vibration propagation member 42 according to the second embodiment. The manufacturing process of the vibration propagation member 42 proceeds from the process step shown in FIG. 20A via the process steps shown in FIGS. 20B and 20C to the process step shown in FIG. 20D.

First, as shown in FIG. 20A, a plurality of metal plates 50, each of which is large enough to cut out a plurality of patterned structures therefrom, and a plurality of metal plates 50, each of which is large enough to cut out an individual patterned structure therefrom, are provided. FIG. 20A shows only one of these metal plates 50. Next, FIG. 20B shows a metal plate 51 which has been patterned into a circular shape to use the metal plate 50 as the top plate 43 and also shows a metal plate 50 on which the sidewall 44 and vertical partitions 45 of the vibration propagation member 42 have been formed by patterning. These metal plates 51, 52 may be formed either on an individual basis or simultaneously. The metal plate 50 may be patterned by, for example, punching the metal plate 50 by pressing, etching the metal plate 50 by photolithography, subjecting the metal plate 50 to laser cutting, or subjecting the metal plate 50 to electrical discharge machining using a discharge wire. In this embodiment, the metal plate 51 patterned into the circular shape to use the metal plate 51 as the top plate 43 and the metal plate 52 on which those elements have been formed by patterning (hereinafter referred to as "patterned elements") are supposed to have been formed into a circular (disklike) shape in top view (i.e., when viewed parallel to the Z-axis). However, this is only an example and should not be construed as limiting. Rather, the top plate 43 and the metal plate 52 having those patterned elements formed thereon according to the present disclosure do not have to have the circular (disklike) shape but may have an elliptical or polygonal shape as well.

Next, as shown in FIG. 20C, the plurality of the metal plates 52, on each of which those patterned elements have been formed, and the top plate 43 are sequentially stacked one on top of another while being aligned with each other. Specifically, first, a predetermined number of metal plates 52, each having those patterned elements formed thereon, are stacked one on top of another. Next, the top plate 43 is laid on top of the uppermost surface of the plurality of metal plates 52, each having those patterned elements formed thereon (i.e., on the surface, facing the positive Z-axis direction, of the metal plate 52 disposed at the top in the positive Z-axis direction and having those patterned elements formed thereon). Subsequently, those patterned metal plates are joined together, by diffusion joining, which is an exemplary direct joining technique, in a vacuum environment under heat and pressure to form an integral material. In the case of stainless steel, for example, the heating temperature during the diffusion joining process is about 1,000°C while stainless steel has a melting point of about 1500°C. Thus, when made of stainless steel, those metal plates 52 that are stacked one on top of another and the top plate 43 may be joined together by heating the metal plates 52 and the top plate 43 to this temperature in a vacuum under pressure with atoms on the junction interface allowed to diffuse and with the base metal not allowed to melt. Note that the diffusion joining requires some degree of planarity. Thus, depending on the process step shown in FIG. 20C, a posterior process step of removing bur and deformation from the metal plate 51 that has been patterned into the circular shape and the metal plates 52, each having those patterned elements formed thereon, may need to be performed after the process step shown in FIG. 20B has been performed. Alternatively, a melt welding process for partially melting the base metal may also be used as another direct joining technique. In the case of stainless steel, the melt welding technique allows a plurality of metal plates to be joined together by heating the metal plates to around 1500°C. Still alternatively, according to another method for joining the metal plates, an epoxy resin or cyanoacrylate adhesive may also be used as a bonding material between the metal plates. Yet alternatively, if an inorganic material is selected as the bonding material, then brazing may also be used.

Performing this manufacturing procedure allows a vibration propagation member 2 according to the first embodiment, in which the respective patterned metal plates have been joined together by the joining method according to this embodiment, to be completed as shown in FIG. 20D. In this embodiment, the vibration propagation member is eventually formed to have a circular columnar external shape. However, this is only an example and should not be construed as limiting. Rather, the vibration propagation member according to this embodiment does not have to have the circular columnar shape but may have an elliptic cylindrical shape or a polygonal prism shape as well.

[2-1-3. Advantages of vibration propagation member]

As can be seen from the foregoing description, the vibration propagation member 42 according to this embodiment is configured to operate by being bonded to one surface of the vibration means 41. The vibration propagation member 42 includes the top plate 43, the bottom plate 47, the sidewall 44, and the vertical partitions 5 arranged perpendicularly to the top plate 43 and the bottom plate 47.

Thus, the vibration transceiver 14 may control the first vibration (f1) as a vibration produced in the same direction as the vibration propagation direction by adjusting the thickness of the vibration propagation member 42 as a constituent element of the vibration propagation member 42. In addition, the vibration transceiver 14 may also control, independently of the first vibration (f1), the second vibration (f2) produced by the membrane structures 48 defined by the thickness of the vertical partitions, the gap distance between the vertical partitions, the thickness of the top plate, and other parameters. The vibration transceiver in which the vibration propagation member 42 is bonded to the vibration means 41 may freely control the frequency of the vibration to transmit and receive. Consequently, a vibration propagation member 42 that allows a high degree of freedom of design may be provided.

In addition, making the spaces defined by the top plate 3, the vertical partitions 5, and the bottom plate 47 hermetically sealed spaces 46 allows the vibration transceiver 14 to directly measure the concentration of even a corrosive fluid or a high-temperature, high-humidity fluid as a fluid under measurement.

Furthermore, the bottom plate 47 and the vibration means 41 may be bonded together more reliably with the bonding material. This allows the vibration transceiver to exhibit stabilized characteristics.

Besides, if the internal pressure P1 of a hermetically sealed space 46 of the vibration propagation member 42 is as high as the pressure P2 of the vibration propagation medium, setting the internal pressure of the hermetically sealed space 46 of the vibration propagation member 42 at the same value as the pressure of the propagation medium improves the efficiency of propagation of the vibration into the vibration propagation medium and ensures stabilized vibration propagation performance.

Alternatively, if the internal pressure P1 of the hermetically sealed space 46 of the vibration propagation member 42 is higher than the pressure P2 of the vibration propagation medium, then the top plate has a raised shape. In that case, while measurement is made on a high-temperature, high-humidity fluid, liquid droplets are less likely to be collected on the vibrating surface of the top plate even with condensation formed due to high humidity. As a result, the efficiency of propagation of vibration into the vibration propagation medium may be improved with good stability and stabilized vibration propagation performance is ensured even in a high-humidity environment.

Still alternatively, if the internal pressure P1 of the hermetically sealed space 46 of the vibration propagation member 42 is lower than the pressure P2 of the vibration propagation medium, then the top plate has a recessed shape. In that case, the efficiency of propagation of vibration into the vibration propagation medium improves due to sound collection effect. Optionally, a vacuum may be created inside the vibration propagation member. Then, the flexure of the top plate may be reduced. In addition, the top plate is regulated by the pressure, thus reducing the chances of causing reverberation, i.e., the chances of the vibration of the vibration propagation member 42 remaining unintentionally.

The inside of this hermetically sealed space 46 may be filled with an inert gas such as an argon gas (Ar), a nitrogen gas ($N_2$), or a helium gas (He). This may reduce the internal corrosion of the vibration propagation member 42.

Optionally, a high-viscosity liquid may be injected into some of the hermetically sealed spaces 46. In that case, damping effect that reduces the vibration at a predetermined frequency would be achieved by changing the viscosity of the liquid. This makes the vibration propagation efficiency improvable selectively only at a target oscillatory frequency.

Furthermore, as exemplified for the vibration propagation member 42a, setting the wall thickness of the vertical partition 45 at a relatively large value in the vicinity of the bottom plate 47 and at a relatively small value in the vicinity of the top plate 43 allows the vibration of the vibration means 41 to propagate and be transmitted efficiently in the vicinity of the bottom plate 47 of the vibration propagation member 42a. In addition, setting the wall thickness of the vertical partition 45 at a relatively small value (at a wall thickness T1) in the vicinity of the top plate 43 and increasing the wall thickness of the vertical partition 45 toward the bottom surface (toward a wall thickness T2) allows the membrane structures 48 of the top plate 43 to vibrate efficiently, thus improving the efficiency of propagation of the vibration into the propagation medium.

Furthermore, as exemplified for the vibration propagation member 42b, the wall thickness of the vertical partition 45 may vary in the vibration propagation direction to change gradually and increase and decrease alternately and repeatedly. Thus, setting the wall thickness of a particular part of the vertical partition 45, corresponding to a peak of the vibration transmitted through the vertical partition 45 of the vibration propagation member 42, at a relatively large value allows only the vibration at a target frequency to be reduced selectively. In addition, the vertical partition 45 serves as a very important column for transmitting the vibration of the vibration propagation member 42b. Letting a particular part of the vibration propagation member 42b have a wall thickness with a low mechanical strength (corresponding to a wall thickness T3) causes an increase in the vibration damping rate of the vibration propagation member 42b. This would achieve the effect of letting the reverberation fade away quickly. In addition, this would also achieve the effect of setting up the vibration promptly.

Furthermore, as exemplified for the vibration propagation member 42c, a plurality of patterned metal plates 52 may be stacked one on top of another to slightly shift from each other and thereby form a vertical partition 45 with an inclined pattern. As a result, the vertical partition 45 may be formed obliquely. This may extend the propagation path of the vibration and delay the time of appearance of the vibration, thus enabling controlling the sonic velocity.

Furthermore, as exemplified for the vibration propagation member 42d, forming a V-pattern with a bent portion 55 by slighting shifting a plurality of patterned metal plates 52 that are stacked one on top of another to form the vertical partition 45 imparts flexibility to the vibration propagation member 42d and causes an increase in the vibration damping rate of the vibration propagation member 42d. This would achieve the advantage of letting the reverberation fade away quickly.

Furthermore, as exemplified for the vibration propagation member 42f, adopting a structure including some vertical partitions 58 that are out of contact with connected to the sidewall may reduce the number of vibration propagation paths formed by the vertical partitions 57 and the sidewall 44, thus reducing unnecessary vibrations.

(Third embodiment)

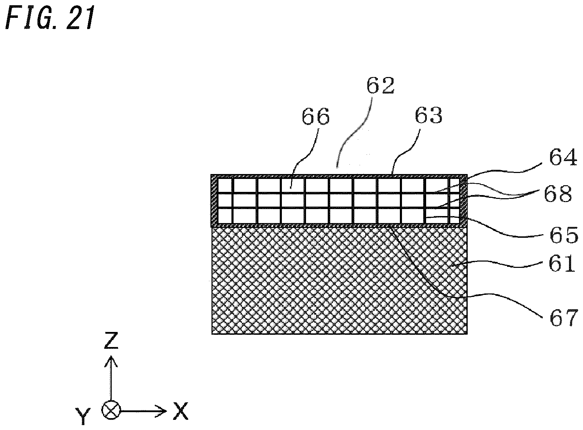

A vibration propagation member according to a third embodiment and a vibration transceiver using the vibration propagation member will now be described with reference to FIG. 21, FIG. 22, and FIGS. 23A-23D.

[3-1. Vibration propagation member]

[3-1-1. Configuration for vibration propagation member]

FIG. 21 is a cross-sectional view schematically illustrating an exemplary configuration in which a vibration propagation member 62 according to the third embodiment is provided on one surface of a vibration means 61.

FIG. 21 illustrates a cross section of the vibration propagation member 62 as taken in the thickness direction (parallel to the Z-axis), i.e., a cross section thereof taken along an X-Z plane. As shown in FIG. 21, the vibration propagation member 62 is bonded to one surface of the vibration means 61 and vibrates as the vibration means 61 vibrates. The vibration propagation member 62 includes a top plate 63, a bottom plate 67, a sidewall 64, vertical partitions 65 arranged perpendicularly to the top plate 63 and the bottom plate, and horizontal partitions 68 arranged parallel to the top plate 63 and the bottom plate 67.

Some or all of the spaces defined by the top plate 63, the vertical partitions 65, and one of the horizontal partitions 68, the spaces defined by the horizontal partitions 68 facing each other and the vertical partitions 65 facing each other, and the spaces defined by one of the horizontal partitions 68, the vertical partitions 65, and the bottom plate 67 may be hermetically sealed spaces 66 and may be the hermetically sealed spaces 66 depending on the intended use. Unless the vibration propagation medium includes any liquid component such as a high-temperature, high-humidity liquid, a through hole may be provided through the vertical partitions 65 and/or the horizontal partitions 68 so that the spaces are continuous with the vibration propagation medium via the through hole(s).

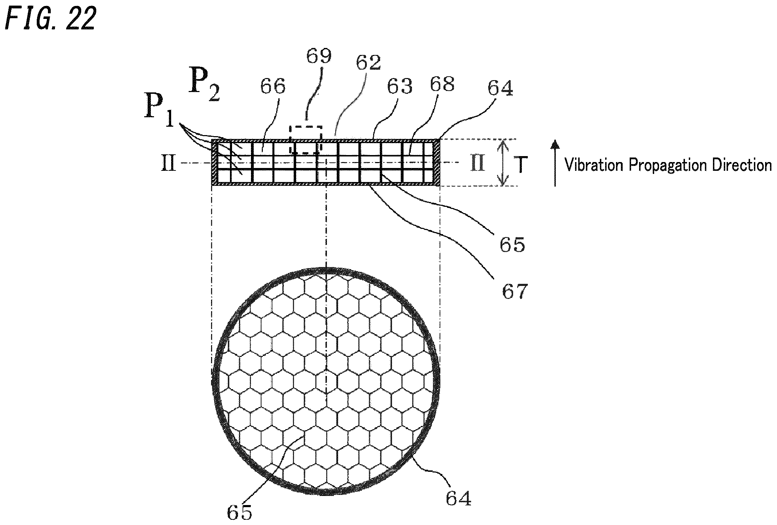

Next, the internal structure of the vibration propagation member 62 will be described with reference to FIG. 22. FIG. 22 is a cross-sectional view illustrating an exemplary configuration for the vibration propagation member 62 according to the third embodiment.

Note that the upper portion of FIG. 22 is a cross-sectional view of the vibration propagation member 62 taken in the thickness direction (parallel to the Z-axis), i.e., a cross-sectional view taken along an X-Z plane. On the other hand, the lower portion of FIG. 22 is a cross-sectional view of the vibration propagation member 62 as taken along the plane II-II shown in the upper portion of FIG. 22, i.e., a cross-sectional view of the vibration propagation member 62 as taken in a direction perpendicular to the thickness direction (parallel to an X-Y plane), or a cross-sectional view thereof taken along the X-Y plane. In FIG. 22, the reference sign T is the thickness of the vibration propagation member 62 as indicated by the double-headed arrow (which is parallel to the Z-axis). Note that the cross section of the vibration propagation member 62 as taken in the direction perpendicular to the thickness direction may include vertical partitions 65 which are arranged in a honeycomb pattern, for example, as shown in the lower portion of FIG. 22.

The advantages achieved by the structure shown in FIG. 22 according to the pressure P1 inside the hermetically sealed spaces 66 of the vibration propagation member 62 and the pressure P2 of the vibration propagation medium are the same as the ones already described for the second embodiment and description thereof will be omitted herein.

[3-1-2. Procedure of manufacturing vibration propagation member]

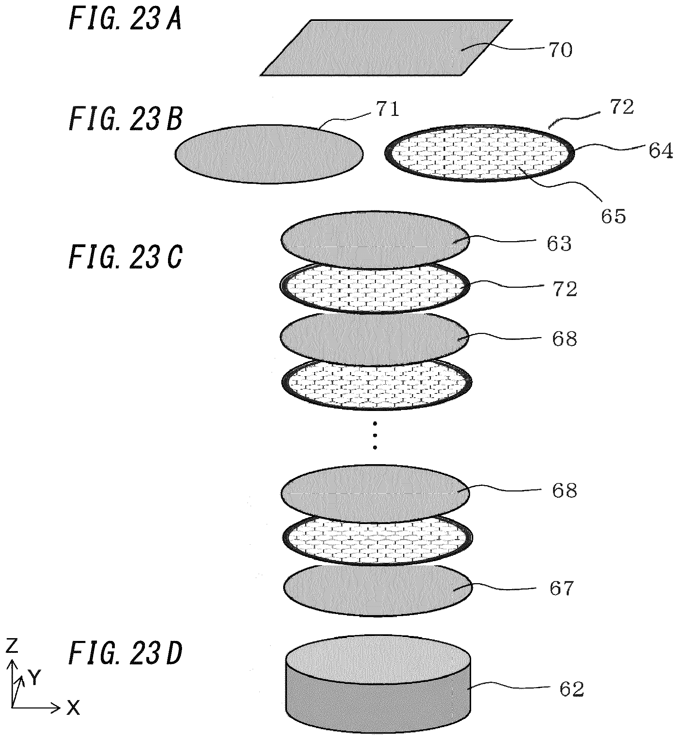

Next, a procedure of manufacturing the vibration propagation member 62 will be described with reference to FIGS. 23A-23D.

FIGS. 23A-23D are perspective views illustrating the procedure of manufacturing the vibration propagation member 62 according to the third embodiment. The manufacturing process of the vibration propagation member 62 proceeds from the process step shown in FIG. 23A via the process steps shown in FIGS. 23B and 23C to the process step shown in FIG. 23D.

First, as shown in FIG. 23A, a plurality of metal plates 70, each of which is large enough to cut out a plurality of patterned structures therefrom, and a plurality of metal plates 70, each of which is large enough to cut out an individual patterned structure therefrom, are provided. FIG. 23A shows only one of these metal plates 70. Next, FIG. 23B shows a metal plate 71 which has been patterned into a circular shape to use the metal plate 70 as the top plate 63, the bottom plate 67, or the horizontal partition 68, and also shows a metal plate 72 on which the sidewall 64 and vertical partitions 65 of the vibration propagation member 62 have been formed by patterning. These metal plates 71, 72 may be formed either on an individual basis or simultaneously. The metal plate 70 may be patterned by, for example, punching the metal plate 70 by pressing, etching the metal plate 70 by photolithography, subjecting the metal plate 70 to laser cutting, or subjecting the metal plate 70 to electrical discharge machining using a discharge wire. In this embodiment, the metal plate 71 patterned into the circular shape and the metal plate 72 on which those elements have been formed by patterning (hereinafter referred to as "patterned elements") are supposed to have been formed into a circular (disklike) shape in top view (i.e., when viewed parallel to the Z-axis). However, this is only an example and should not be construed as limiting. Rather, the metal plate 71 patterned into the circular shape and the metal plate 72 having those patterned elements formed thereon according to the present disclosure do not have to have the circular (disklike) shape but may have an elliptical or polygonal shape as well.

Next, as shown in FIG. 23C, a plurality of the metal plates, which have been patterned into the circular shape to use them as the top plate 63, the bottom plate 67, and the horizontal partitions 68, and the metal plates 72, on each of which those patterned elements have been formed, are alternately stacked one on top of another while being aligned with each other. Specifically, a plurality of metal plates 71, which have been patterned into the circular shape to use them as the horizontal partitions 68, and a plurality of metal plates 72, each having the vertical partitions 65 and sidewall 44 formed as patterned elements thereon, are alternately stacked one on top of another. Next, the metal plate 71 that has been patterned into the circular shape is laid, as the top plate 63, on top of the uppermost surface of the alternate stack of the plurality of metal plates 71, each having been patterned into the circular shape, and the plurality of metal plates 72, each having those patterned elements formed thereon (i.e., on the surface, facing the positive Z-axis direction, of the metal plate 72 disposed at the top in the positive Z-axis direction and having those patterned elements formed thereon). Thereafter, the metal plate 71 that has been patterned into the circular shape is laid, as the bottom plate 67, on top of the lowermost surface of the alternate stack of the plurality of metal plates 71, 72 (i.e., on the surface, facing the negative Z-axis direction, of the metal plate 72 disposed at the bottom in the negative Z-axis direction and having those patterned elements formed thereon).

Subsequently, those patterned metal plates are joined together, by diffusion joining, which is an exemplary direct joining technique, in a vacuum environment under heat and pressure to form an integral material. In the case of stainless steel, for example, the heating temperature during the diffusion joining process is about 1,000°C while stainless steel has a melting point of about 1500°C. Thus, when made of stainless steel, the alternate stack of the plurality of metal plates 71 patterned into the circular shape, the plurality of metal plates 72 having those patterned elements formed thereon, the top plate 63, and the bottom plate 67 may be joined together by heating the metal plates 71, 72, the top plate 63, and the bottom plate 67 to this temperature in a vacuum under pressure with atoms on the junction interface allowed to diffuse and with the base metal not allowed to melt. Note that the diffusion joining requires some degree of planarity. Thus, depending on the process step shown in FIG. 23C, a posterior process step of removing bur and deformation from the metal plates 71 that have been patterned into the circular shape and the metal plates 72, each having those patterned elements formed thereon, may need to be performed after the process step shown in FIG. 23B has been performed. Alternatively, a melt welding process for partially melting the base metal may also be used as another direct joining technique. In the case of stainless steel, the melt welding technique allows a plurality of metal plates to be joined together by heating the metal plates to around 1500°C. Still alternatively, according to another method for joining the metal plates, an epoxy resin or cyanoacrylate adhesive may also be used as a bonding material between the metal plates. Yet alternatively, if an inorganic material is selected as the bonding material, then brazing may also be used.

Performing this manufacturing procedure allows a vibration propagation member 62 according to the third embodiment, in which the respective patterned metal plates have been joined together by the joining method according to this embodiment, to be completed as shown in FIG. 23D. In this embodiment, the vibration propagation member 62 is eventually formed to have a circular columnar external shape. However, this is only an example and should not be construed as limiting. Rather, the vibration propagation member according to the present disclosure does not have to have the circular columnar shape but may have an elliptic cylindrical shape or a polygonal prism shape as well.

[3-1-3. Advantages of vibration propagation member]

As can be seen from the foregoing description, the vibration propagation member 62 according to this embodiment is configured to operate by being bonded to one surface of the vibration means 61. The vibration propagation member 62 includes the top plate 63, the bottom plate 67, the sidewall 64, the vertical partitions 65 arranged perpendicularly to the top plate 63 and the bottom plate 67, and the horizontal partitions 68 arranged parallel to the top plate 63 and the bottom plate 67.

In addition, the horizontal partitions 68 may also reduce the vibration propagation loss to be caused by the vertical partitions 65, thus improving the efficiency of propagation of the vibration into the propagation medium.

Furthermore, making some or all of the spaces defined by the top plate 63, the vertical partitions 65, and one of the horizontal partitions 68, the spaces defined by the horizontal partitions 68 facing each other and the vertical partitions 65 facing each other, and the spaces defined by one of the horizontal partitions 68, the vertical partitions 65, and the bottom plate 67 hermetically sealed spaces 66 enables providing a vibration propagation member 62 that may operate with good stability even in a high-temperature, high-humidity fluid. In addition, the hermetically sealed spaces 66 are divided into a larger number of hermetically sealed spaces, thus causing a decrease in the rate of submergence in any of the vertical partitions 65 and the horizontal partitions 68. Consequently, a highly reliable vibration propagation member 62 may be provided.

Optionally, a through hole may be provided through some or all of the vertical partitions 65 and the horizontal partitions 68. Providing the through hole prevents the vibration propagation member 62 from being deformed under pressure even when the vibration propagation member 62 is exposed to an ultrahigh pressure fluid, thus providing a vibration propagation member 62 that operates with good stability.

(Fourth embodiment)

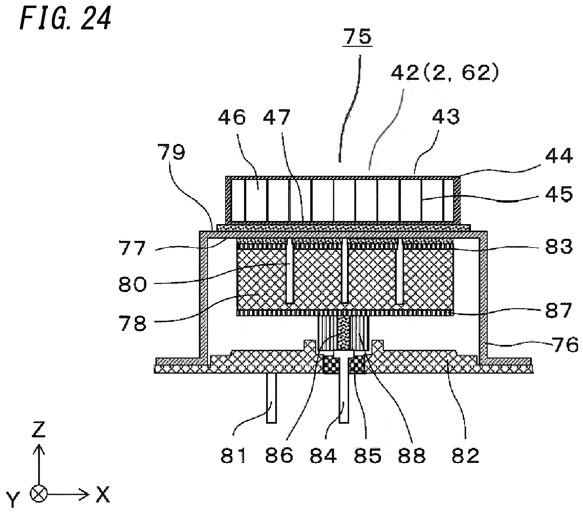

Next, a fourth embodiment will be described with reference to FIG. 24.

[4-1. Vibration transceiver]

[4-1-1. Configuration for vibration transceiver]

FIG. 24 is a cross-sectional view illustrating an exemplary configuration for a vibration transceiver 75 according to the fourth embodiment. FIG. 24 illustrates a cross section of the vibration transceiver 75 as taken in the thickness direction (parallel to the Z-axis), i.e., a cross section thereof taken along an X-Z plane.

As shown in FIG. 24, the vibration transceiver 75 includes: a bottomed cylindrical metallic case 76; a vibration means 78 disposed on a top inner wall surface 77 of the bottomed cylindrical metallic case 76; and the vibration propagation member 2 according to the first embodiment described above, the vibration propagation member 42 according to the second embodiment described above, or the vibration propagation member 62 according to the third embodiment described above. The vibration propagation member 2, 42, 62 is disposed on a top outer wall surface 79 of the bottomed cylindrical metallic case 76.

The top inner wall surface 77 is the inner top surface (i.e., the surface facing the negative Z-axis direction) of the bottomed cylindrical metallic case 76. The top outer wall surface 79 is the outer top surface (i.e., the surface facing the positive Z-axis direction) of the bottomed cylindrical metallic case 76.

The vibration means 78 has grooves 80 which are arranged parallel to the vibration propagation direction of the vibration means 78. The vertical partitions 45 of the vibration propagation member 42 and the grooves 80 of the vibration means 78 are parallel to each other.

A terminal 81 is made of a metallic material and electrically connected to one electrode 83 of the vibration means 78 via a tag block 82 and the bottomed cylindrical metallic case 76. A terminal 84 is electrically insulated from the terminal 81 via an insulating sealing member 85 and is electrically connected to the other electrode 87 of the vibration means 78 via a conductive rubber's conductive portion 86. The conductive rubber's conductive portion 86 has a generally circular cylindrical shape and includes a conductive rubber's insulating portion 88 on the outer periphery thereof. The conductive rubber's conductive portion 86 and the terminals 81, 84 are electrically insulated from each other.

The conductive rubber's conductive portion 86 and the conductive rubber's insulating portion 88 are pressed upward (i.e., in the positive Z-axis direction) by the tag block 82. Note that in the following description, the vibration propagation member 42 is supposed to be bonded to the top outer wall surface 79 of the bottomed cylindrical metallic case 76.

[4-1-2. Procedure of manufacturing vibration transceiver]

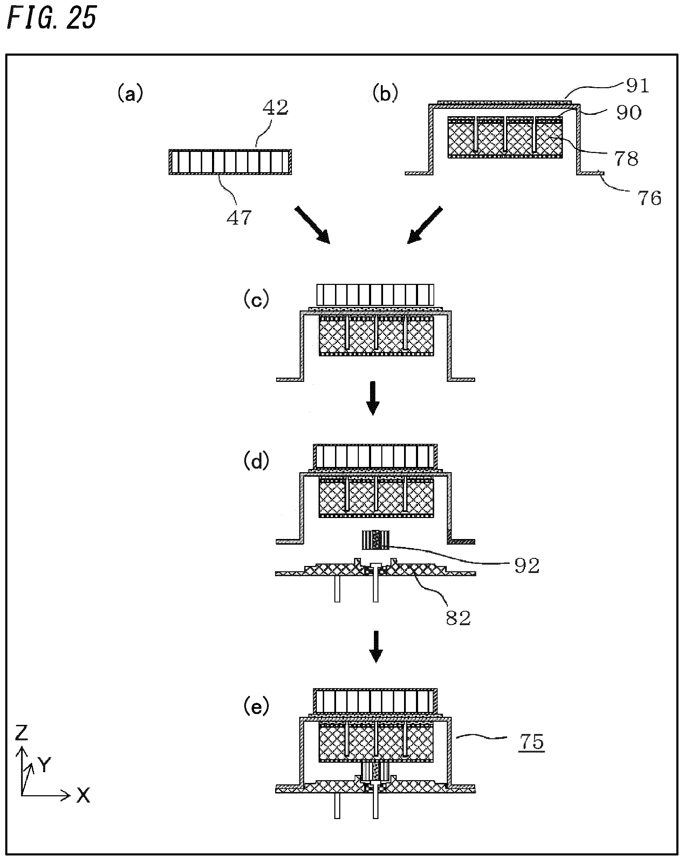

Next, a procedure of manufacturing the vibration transceiver 75 will be described with reference to FIG. 25.

FIG. 25 is a set of cross-sectional views illustrating the procedure of manufacturing the vibration transceiver 75 according to the fourth embodiment.

First, as shown in portion (a) of FIG. 25, the vibration propagation member 42 already described for the second embodiment is provided. In parallel, as shown in portion (b) of FIG. 25, a thermosetting adhesive for use as a bonding material 90 is applied onto the upper surface (i.e., the surface facing the positive Z-axis direction) of the vibration means 41 and the same bonding material 91 is also applied onto the top outer wall surface 79 of the bottomed cylindrical metallic case 76. Next, as shown in portion (c) of FIG. 25, the bottomed cylindrical metallic case 76 is laid on top of the vibration means 78 and the upper surface (i.e., the surface facing the positive Z-axis direction) of the vibration means 78 and the top inner wall surface 77 of the bottomed cylindrical metallic case 76 are bonded together via the bonding material 90 interposed between them. In addition, the vibration propagation member 42 is also laid on top of the bottomed cylindrical metallic case 76 and the top outer wall surface 79 of the bottomed cylindrical metallic case 76 and (the surface facing the negative Z-axis direction of) the bottom plate 47 of the vibration propagation member 42 are bonded together via the bonding material 91 interposed between them. In this case, the vibration propagation member 42, the bottomed cylindrical metallic case 76, and the vibration propagation member 42 are heated with a pressure of about 2 $kg/cm^2$ to about 10 $kg/cm^2$ applied thereto, thereby curing the thermosetting adhesive. This allows the vibration propagation member 42 and the vibration means 78 to be adhered onto the bottomed cylindrical metallic case 76.

Next, as shown in portion (d) of FIG. 25, the tag block 82, into which conductive rubber 92 is inserted, is mounted into the aperture edge of the bonded assembly of the vibration propagation member 42, the bottomed cylindrical metallic case 76, and the vibration means 78 that have been heated and cured and bonded together through these process steps from under the bonded assembly, thereby welding the flange of the bottomed cylindrical metallic case 76 and the peripheral edge portion of the tag block 82 together. During this welding process step, an inert gas such as an argon gas, a nitrogen gas, or a helium gas is introduced into the hermetically sealed space surrounded with the tag block 82 and the bottomed cylindrical metallic case 76. This may reduce deterioration of the electrodes of the vibration means 78 and deterioration of the bonded portion between the vibration means 78 and the bottomed cylindrical metallic case 76.

A material for the bottomed cylindrical metallic case 76 may be any suitable material with electrical conductivity such as a metal. The material for the bottomed cylindrical metallic case 76 may be selected from the group consisting of, for example, iron, brass, copper, aluminum, stainless steel, and alloys thereof, or a plated one of any of these metals.

The thermosetting adhesive for use as the bonding materials 90, 91 may be any thermosetting resin without limitation. Examples of the thermosetting resins include epoxy resins, phenol resins, polyester resins, and melamine resins. As the case may be, even a thermoplastic resin may also be used as the adhesive as long as the glass transition temperature thereof is equal to or higher than 70°C, which is set as the upper limit of the operating temperature of the vibration transceiver 75.

In this manner, the vibration transceiver 75 is completed as shown in portion (e) of FIG. 25.

[4-1-3. Advantages of vibration transceiver]

As can be seen from the foregoing description, the vibration transceiver 75 according to this embodiment includes: the bottomed cylindrical metallic case 76; the vibration means 78 disposed on the top inner wall surface 77 of the bottomed cylindrical metallic case 76; and the vibration propagation member according to any one of the first, second, and third embodiments described above which is disposed on the top outer wall surface 79 of the bottomed cylindrical metallic case 76. Thus, vibration transceiver 75 according to the present disclosure may control the first vibration (f1) as a vibration produced in the same direction as the vibration propagation direction by adjusting the thickness of the vibration propagation member as a constituent element of the vibration propagation member. In addition, the vibration transceiver 75 may also control, independently of the first vibration (f1), the second vibration (f2) produced by the membrane structures defined by the thickness of the vertical partitions, the gap distance between the vertical partitions, the thickness of the top plate, and other parameters. The vibration transceiver 75 in which the vibration propagation member is bonded to the vibration means 78 may freely control the frequency of the vibration to transmit and receive. Consequently, a vibration propagation member that allows a high degree of freedom of design may be provided.

In addition, making the space defined by the internal structure of the vibration transceiver a hermetically sealed space allows the vibration transceiver to directly measure the concentration of even a corrosive fluid or a high-temperature, high-humidity fluid as a fluid under measurement.

Optionally, the above-described configurations for the respective embodiments and their implementations may be adopted as appropriate in combination.

(Recapitulation)

A vibration propagation member (2) according to a first aspect of the exemplary embodiment is configured to operate by being bonded to one surface of a vibration means (1). The vibration propagation member (2) includes: a top plate (3); a sidewall (4); and at least one vertical partition (5) disposed perpendicularly to the top plate (3). As used herein, the phrase "perpendicularly to the top plate" refers to not only a situation where the angle defined by the vertical partition with respect to the top plate is exactly the right angle (90 degrees) but also a situation where the angle is somewhat different from the right angle (e.g., 90 degrees ± 10 degrees).

A vibration propagation member (2) according to a second aspect of the exemplary embodiment, which may be implemented in conjunction with the first aspect, preferably has a plurality of spaces defined by the top plate (3), the at least one vertical partition (5), and the one surface of the vibration means (1), to which the vibration propagation member (2) is bonded. At least one of the plurality of spaces is preferably a hermetically sealed space (6).

A vibration propagation member (42, 42a, 42b, 42c, 42d, 42e, 42f) according to a third aspect of the exemplary embodiment is configured to operate by being bonded to one surface of a vibration means (41). The vibration propagation member (42, 42a, 42b, 42c, 42d, 42e, 42f) includes: a top plate (43); a bottom plate (47); a sidewall (44); and at least one vertical partition (45, 57, 58) disposed perpendicularly to the top plate (43) and the bottom plate (47). As used herein, the phrase "perpendicularly to the top plate and the bottom plate" refers to not only a situation where the angle defined by the vertical partition with respect to the top plate and the bottom plate is exactly the right angle (90 degrees) but also a situation where the angle is somewhat different from the right angle (e.g., 90 degrees ± 10 degrees).

A vibration propagation member (42, 42a, 42b, 42c, 42d, 42e, 42f) according to a fourth aspect of the exemplary embodiment, which may be implemented in conjunction with the third aspect, preferably has a plurality of spaces defined by the top plate (43), the bottom plate (47), and the at least one vertical partition (45, 57, 58). At least one of the plurality of spaces is preferably a hermetically sealed space (46).

A vibration propagation member (62) according to a fifth aspect of the exemplary embodiment is configured to operate by being bonded to one surface of a vibration means (61). The vibration propagation member (62) includes: a top plate (63); a bottom plate (67); a sidewall (64) of the vibration propagation member (62); at least one vertical partition (65) disposed perpendicularly to the top plate (63) and the bottom plate (67); and at least one horizontal partition (68) arranged horizontally to the top plate (63) and the bottom plate (67). As used herein, the phrase "perpendicularly to the top plate and the bottom plate" refers to not only a situation where the angle defined by the vertical partition with respect to the top plate and the bottom plate is exactly the right angle (90 degrees) but also a situation where the angle is somewhat different from the right angle (e.g., 90 degrees ± 10 degrees). Also, as used herein, the phrase "horizontally to the top plate and the bottom plate" refers to not only a situation where the angle defined by the horizontal partition with respect to the top plate and the bottom plate is exactly zero degrees but also a situation where the angle is somewhat different from zero degrees (e.g., 0 degrees ± 10 degrees).

A vibration propagation member (62) according to a sixth aspect of the exemplary embodiment, which may be implemented in conjunction with the fifth aspect, preferably has a plurality of spaces defined by the top plate (63), the at least one vertical partition (65), the at least one horizontal partition (68), and any one surface of the bottom plate (67). At least one of the plurality of spaces is preferably a hermetically sealed space (66).

A vibration propagation member (2, 42, 42a, 42b, 42c, 42d, 42e, 42f, 62) according to a seventh aspect of the exemplary embodiment, which may be implemented in conjunction with any one of the first to sixth aspects, is preferably configured to use at least a first vibration (f1) produced in the same direction as a vibration propagation direction and a second vibration (f2) produced by a membrane structure defined by the top plate (3, 43, 63) and the at least one vertical partition (5, 45, 57, 58, 65).

In a vibration propagation member (2, 42, 42a, 42b, 42c, 42d, 42e, 42f, 62) according to an eighth aspect of the exemplary embodiment, which may be implemented in conjunction with the seventh aspect, the first vibration (f1) and the second vibration (f2) preferably have the same frequency. As used herein, the phrase "have the same frequency" refers to not only a situation where there is exactly no difference in frequency between the first and second variations but also a situation where the frequencies of the first and second vibrations are so insignificantly different as to be regarded as being the same.

In a vibration propagation member (2, 42, 42a, 42b, 42c, 42d, 42e, 42f, 62) according to a ninth aspect of the exemplary embodiment, which may be implemented in conjunction with the seventh aspect, the first vibration (f1) and the second vibration (f2) preferably have mutually different frequencies.

In a vibration propagation member (2, 42, 42a, 42b, 42c, 42d, 42e, 42f, 62) according to a tenth aspect of the exemplary embodiment, which may be implemented in conjunction with any one of the first to ninth aspects, the at least one vertical partition (5, 45, 57, 58, 65) preferably includes a plurality of vertical partitions (5, 45, 57, 58, 65). The plurality of vertical partitions (5, 45, 57, 58, 65) preferably includes some vertical partitions (5, 45, 57, 58, 65) that are out of contact with the sidewall (44).

In a vibration propagation member (2, 42, 42a, 42b, 42c, 42d, 42e, 42f, 62) according to an eleventh aspect of the exemplary embodiment, which may be implemented in conjunction with any one of the second, fourth, and sixth aspects, an internal pressure (P1) of the hermetically sealed space (6, 46, 66) is preferably as high as (i.e., the same as) pressure (P2) of a vibration propagation medium. As used herein, the expression "pressure is the same" refers to not only a situation where there is exactly no difference in pressure but also a situation where these two pressures are so insignificantly different as to be regarded as being the same.

In a vibration propagation member (2, 42, 42a, 42b, 42c, 42d, 42e, 42f, 62) according to a twelfth aspect of the exemplary embodiment, which may be implemented in conjunction with any one of the second, fourth, and sixth aspects, an internal pressure (P1) of the hermetically sealed space (6, 46, 66) is preferably higher than pressure (P2) of a vibration propagation medium.

In a vibration propagation member (2, 42, 42a, 42b, 42c, 42d, 42e, 42f, 62) according to a thirteenth aspect of the exemplary embodiment, which may be implemented in conjunction with any one of the second, fourth, and sixth aspects, an internal pressure (P1) of the hermetically sealed space (6, 46, 66) is preferably lower than pressure (P2) of a vibration propagation medium.

In a vibration propagation member (2, 42, 42a, 42b, 42c, 42d, 42e, 42f, 62) according to a fourteenth aspect of the exemplary embodiment, which may be implemented in conjunction with any one of the first to thirteenth aspects, the at least one vertical partition (5, 45, 57, 58, 65) preferably has a through hole.

In a vibration propagation member (2, 42, 42a, 42b, 42c, 42d, 42e, 42f, 62) according to a fifteenth aspect of the exemplary embodiment, which may be implemented in conjunction with the fifth or sixth aspect, the at least one vertical partition (5, 45, 57, 58, 65) and/or the at least one horizontal partition (68) preferably has a through hole.

In a vibration propagation member (2, 42, 42a, 42b, 42c, 42d, 42e, 42f, 62) according to a sixteenth aspect of the exemplary embodiment, which may be implemented in conjunction with any one of the first to fifteenth aspects, the at least one vertical partition (5, 45, 57, 58, 65) preferably has a wall thickness that varies in a vibration propagation direction.

In a vibration propagation member (2, 42, 42a, 42b, 42c, 42d, 42e, 42f, 62) according to a seventeenth aspect of the exemplary embodiment, which may be implemented in conjunction with the sixteenth aspect, the wall thickness of the at least one vertical partition (5, 45, 57, 58, 65) preferably varies, and changes gradually, in the vibration propagation direction.

In a vibration propagation member (2, 42, 42a, 42b, 42c, 42d, 42e, 42f, 62) according to an eighteenth aspect of the exemplary embodiment, which may be implemented in conjunction with the sixteenth aspect, the wall thickness of the at least one vertical partition (5, 45, 57, 58, 65) preferably varies, changes gradually, and alternately increases and decreases repeatedly, in the vibration propagation direction.

In a vibration propagation member (2, 42, 42a, 42b, 42c, 42d, 42e, 42f, 62) according to a nineteenth aspect of the exemplary embodiment, which may be implemented in conjunction with any one of the first to fifteenth aspects, the at least one vertical partition (5, 45, 57, 58, 65) preferably has a wall thickness defined by multiple layers that are stacked one on top of another, and arranged to shift from each other, in a thickness direction.

In a vibration propagation member (2, 42, 42a, 42b, 42c, 42d, 42e, 42f, 62) according to a twentieth aspect of the exemplary embodiment, which may be implemented in conjunction with any one of the first to nineteenth aspects, a plurality of plate members (10, 50, 70), each having a plurality of patterned elements formed out of an identical material thereon, are preferably stacked one on top of another and directly joined together.

In a vibration propagation member (2, 42, 42a, 42b, 42c, 42d, 42e, 42f, 62) according to a twenty-first aspect of the exemplary embodiment, which may be implemented in conjunction with any one of the first to nineteenth aspects, a plurality of plate members (10, 50, 70), each having a plurality of patterned elements formed thereon, are preferably

**EP 4 412 249 A1**

stacked one on top of another and bonded together via a bonding material.

A method for manufacturing a vibration propagation member according to a twenty-second aspect of the exemplary embodiment is a method for manufacturing the vibration propagation member (2, 42, 42a, 42b, 42c, 42d, 42e, 42f, 62) according to the twentieth aspect by performing, in this order, the steps of: forming patterned elements on each of a plurality of metal plates (10, 50, 70); stacking, one on top of another, the plurality of metal plates (10, 50, 70), each of which has the patterned elements formed thereon; and directly joining the plurality of metal plates (10, 50, 70) together by applying, at a high temperature, load to the plurality of metal plates (10, 50, 70) that have been stacked.

A vibration transceiver (14, 14a, 14b) according to a twenty-third aspect of the exemplary embodiment includes: a vibration means (1, 41, 61); and the vibration propagation member (2, 42, 42a, 42b, 42c, 42d, 42e, 42f, 62) according to any one of the first to twenty-first aspects bonded to one surface of the vibration means (1, 41, 61).

A vibration transceiver (75) according to a twenty-fourth aspect of the exemplary embodiment includes: a bottomed cylindrical metallic case (76); the vibration propagation member (2, 42, 42a, 42b, 42c, 42d, 42e, 42f, 62) according to any one of the first to twenty-first aspects disposed on a top outer wall surface (79) of the bottomed cylindrical metallic case (76); and a vibration means (78) disposed on a top inner wall surface (77) of the bottomed cylindrical metallic case (76).

In a vibration transceiver (14, 14a, 14b, 75) according to a twenty-fifth aspect of the exemplary embodiment, which may be implemented in conjunction with the twenty-third or twenty-fourth aspect, the vibration means (1, 41, 61, 78) is preferably configured as a piezoelectric member. The piezoelectric member preferably has a groove (80) extending parallel to a vibration propagation direction of the piezoelectric member. The at least one vertical partition (5, 45, 57, 58, 65) of the vibration propagation member (2, 42, 42a, 42b, 42c, 42d, 42e, 42f, 62) and the groove (80) of the piezoelectric member are preferably parallel to each other. As used herein, the expression "the at least one vertical partition and the groove of the piezoelectric member are parallel" refers to not only a situation where the vertical partition and the groove of the piezoelectric member are exactly parallel to each other (i.e., the angle formed between them is zero degrees) but also a situation where the angle is somewhat different from the zero degrees (e.g., 0 degrees ± 10 degrees).

A flowmeter (23) according to a twenty-sixth aspect of the exemplary embodiment includes: a flow channel (25) configured to let a fluid under measurement pass through; a pair of the vibration transceivers (14, 14a, 14b, 75, 26, 27) according to any one of the twenty-third to twenty-fifth aspects arranged to face the flow channel (25); a timer (28) configured to measure a time of appearance of a signal transmitted by any one of the pair of the vibration transceivers (14, 14a, 14b, 75); and a calculating means (29) configured to calculate a flow rate based on the time of appearance measured by the timer (28).

A velocity meter (24) according to a twenty-seventh aspect of the exemplary embodiment includes: a flow channel (25) configured to let a fluid under measurement pass through; a pair of the vibration transceivers (14, 14a, 14b, 75, 26, 27) according to any one of the twenty-third to twenty-fifth aspects arranged to face the flow channel (25); a timer (28) configured to measure a time of appearance of a signal transmitted by any one of the pair of the vibration transceivers (14, 14a, 14b, 75); and a calculating means (29) configured to calculate a flow velocity based on the time of appearance measured by the timer (28).

A concentration meter (30) according to a twenty-eighth aspect of the exemplary embodiment includes: a housing (31) having a vent hole (32) configured to let a mixed gas as a fluid under measurement pass through; a pair of the vibration transceivers (14, 14a, 14b, 75, 33, 34) according to any one of the twenty-third to twenty-fifth aspects arranged inside the housing (31) to face each other with a predetermined distance left between the pair of the vibration transceivers (14, 14a, 14b, 75, 33, 34); a temperature sensor (35) disposed inside the housing (31); a timer (36) configured to measure a time of appearance of a signal transmitted by any one of the pair of the vibration transceivers (14, 14a, 14b, 75, 33, 34); and a calculating means (37) configured to calculate a propagation velocity and an average molecular weight and gas concentration of the mixed gas based on the time of appearance measured by the timer (36).

**Industrial Applicability**

The present disclosure is applicable to an ultrasonic flowmeter, velocity meter, and concentration meter for use to measure the flow rate, flow velocity, and concentration of a gas. Specifically, the present disclosure is applicable to, for example, a flowmeter for home use, an anesthetic gas concentration meter for medical use, and a hydrogen concentration meter for use in fuel cells.

**Reference Signs List**

| | |
|---|---|
| 1 | Vibration Means |
| 2 | Vibration Propagation Member |

21

| 3 | Top Plate |
|---|---|
| 4 | Sidewall |
| 5 | Vertical Partition |
| 6 | Hermetically Sealed Space |
| 7 | Membrane Structure |
| 10 | Metal Plate |
| 11 | Metal Plate |
| 12 | Metal Plate |
| 14, 14a, 14b | Vibration Transceiver |
| 15 | Electrode |
| 16 | Electrode |
| 17 | Bonding Material |
| 18 | Lead Wire |
| 19 | Lead Wire |
| 23 | Flowmeter |
| 24 | Velocity Meter |
| 25 | Flow Channel |
| 26 | Ultrasonic Transceiver |
| 27 | Ultrasonic Transceiver |
| 28 | Timer |
| 29 | Calculating Means |
| 30 | Concentration Meter |
| 31 | Housing |
| 32 | Vent Hole |
| 33 | Ultrasonic Transceiver |
| 34 | Ultrasonic Transceiver |
| 35 | Temperature Sensor |
| 36 | Timer |
| 37 | Calculating Means |
| 41 | Vibration Means |
| 42, 42a, 42b, 42c, 42d, 42e, 42f | Vibration Propagation Member |
| 43 | Top Plate |
| 44 | Sidewall |
| 45 | Vertical Partition |
| 46 | Hermetically Sealed Space |
| 47 | Bottom Plate |
| 48 | Membrane Structure |
| 50 | Metal Plate |
| 51 | Metal Plate |
| 52 | Metal Plate |
| 55 | Bent Portion |
| 57 | Vertical Partition |
| 58 | Vertical Partition |
| 61 | Vibration Means |
| 62 | Vibration Propagation Member |
| 63 | Top Plate |
| 64 | Sidewall |
| 65 | Vertical Partition |
| 66 | Hermetically Sealed Space |
| 67 | Bottom Plate |
| 68 | Horizontal Partition |
| 69 | Membrane Structure |
| 70 | Metal Plate |
| 71 | Metal Plate |
| 72 | Metal Plate |
| 75 | Vibration Transceiver |
| 76 | Bottomed Cylindrical Metallic Case |
| 77 | Top Inner Wall Surface |

| 78 | Vibration Means |
| 79 | Top Outer Wall Surface |
| 80 | Groove |
| 81 | Terminal |
| 82 | Tag Block |
| 83 | Electrode |
| 84 | Terminal |
| 85 | Insulating Sealing Member |
| 86 | Conductive Rubber's Conductive Portion |
| 87 | Electrode |
| 88 | Conductive Rubber's Insulating Portion |
| 90 | Bonding Material |
| 91 | Bonding Material |
| 92 | Conductive Rubber |

**Claims**

1. A vibration propagation member configured to operate by being bonded to one surface of a vibration means, the vibration propagation member comprising: a top plate; a sidewall; and at least one vertical partition disposed perpendicularly to the top plate.

2. The vibration propagation member of claim 1, wherein

   the vibration propagation member has a plurality of spaces defined by the top plate, the at least one vertical partition, and the one surface of the vibration means, to which the vibration propagation member is bonded, and at least one of the plurality of spaces is a hermetically sealed space.

3. A vibration propagation member configured to operate by being bonded to one surface of a vibration means, the vibration propagation member comprising: a top plate; a bottom plate; a sidewall; and at least one vertical partition disposed perpendicularly to the top plate and the bottom plate.

4. The vibration propagation member of claim 3, wherein

   the vibration propagation member has a plurality of spaces defined by the top plate, the bottom plate, and the at least one vertical partition, and at least one of the plurality of spaces is a hermetically sealed space.

5. A vibration propagation member configured to operate by being bonded to one surface of a vibration means, the vibration propagation member comprising: a top plate; a bottom plate; a sidewall of the vibration propagation member; at least one vertical partition disposed perpendicularly to the top plate and the bottom plate; and at least one horizontal partition arranged horizontally to the top plate and the bottom plate.

6. The vibration propagation member of claim 5, wherein

   the vibration propagation member has a plurality of spaces defined by the top plate, the at least one vertical partition, the at least one horizontal partition, and any one surface of the bottom plate, and at least one of the plurality of spaces is a hermetically sealed space.

7. The vibration propagation member of any one of claims 1 to 6, wherein the vibration propagation member is configured to use at least a first vibration produced in the same direction as a vibration propagation direction and a second vibration produced by a membrane structure defined by the top plate and the at least one vertical partition.

8. The vibration propagation member of claim 7, wherein the first vibration and the second vibration have the same frequency.

9. The vibration propagation member of claim 7, wherein

the first vibration and the second vibration have mutually different frequencies.

10. The vibration propagation member of any one of claims 1 to 9, wherein

the at least one vertical partition includes a plurality of vertical partitions, and
the plurality of vertical partitions includes some vertical partitions that are out of contact with the sidewall.

11. The vibration propagation member of any one of claims 2, 4, and 6, wherein
an internal pressure of the hermetically sealed space is as high as pressure of a vibration propagation medium.

12. The vibration propagation member of any one of claims 2, 4, and 6, wherein
an internal pressure of the hermetically sealed space is higher than pressure of a vibration propagation medium.

13. The vibration propagation member of any one of claims 2, 4, and 6, wherein
an internal pressure of the hermetically sealed space is lower than pressure of a vibration propagation medium.

14. The vibration propagation member of any one of claims 1 to 13, wherein
the at least one vertical partition has a through hole.

15. The vibration propagation member of claim 5 or 6, wherein
the at least one vertical partition and/or the at least one horizontal partition has a through hole.

16. The vibration propagation member of any one of claims 1 to 15, wherein
the at least one vertical partition has a wall thickness that varies in a vibration propagation direction.

17. The vibration propagation member of claim 16, wherein
the wall thickness of the at least one vertical partition varies, and changes gradually, in the vibration propagation direction.

18. The vibration propagation member of claim 16, wherein
the wall thickness of the at least one vertical partition varies, changes gradually, and alternately increases and decreases repeatedly, in the vibration propagation direction.

19. The vibration propagation member of any one of claims 1 to 15, wherein
the at least one vertical partition has a wall thickness defined by multiple layers that are stacked one on top of another, and arranged to shift from each other, in a thickness direction.

20. The vibration propagation member of any one of claims 1 to 19, wherein
a plurality of plate members, each having a plurality of patterned elements formed out of an identical material thereon, are stacked one on top of another and directly joined together.

21. The vibration propagation member of any one of claims 1 to 19, wherein
a plurality of plate members, each having a plurality of patterned elements formed thereon, are stacked one on top of another and bonded together via a bonding material.

22. A method for manufacturing the vibration propagation member of claim 20 by performing, in this order, the steps of:

forming patterned elements on each of a plurality of metal plates;
stacking the plurality of metal plates one on top of another, each of the plurality of metal plates having the patterned elements formed thereon; and
directly joining the plurality of metal plates together by applying, at a high temperature, load to the plurality of metal plates that have been stacked.

23. A vibration transceiver comprising:

a vibration means; and
the vibration propagation member of any one of claims 1 to 21 bonded to one surface of the vibration means.

**24.** A vibration transceiver comprising:

a bottomed cylindrical metallic case;
the vibration propagation member of any one of claims 1 to 21 disposed on a top outer wall surface of the bottomed cylindrical metallic case; and
a vibration means disposed on a top inner wall surface of the bottomed cylindrical metallic case.

**25.** The vibration transceiver of claim 23 or 24, wherein

the vibration means is configured as a piezoelectric member,
the piezoelectric member has a groove extending parallel to a vibration propagation direction of the piezoelectric member, and
the at least one vertical partition of the vibration propagation member and the groove of the piezoelectric member are parallel to each other.

**26.** A flowmeter comprising:

a flow channel configured to let a fluid under measurement pass through;
a pair of the vibration transceivers of any one of claims 23 to 25 arranged to face the flow channel;
a timer configured to measure a time of appearance of a signal transmitted by any one of the pair of the vibration transceivers; and
a calculating means configured to calculate a flow rate based on the time of appearance measured by the timer.

**27.** A velocity meter comprising:

a flow channel configured to let a fluid under measurement pass through;
a pair of the vibration transceivers of any one of claims 23 to 25 arranged to face the flow channel;
a timer configured to measure a time of appearance of a signal transmitted by any one of the pair of the vibration transceivers; and
a calculating means configured to calculate a flow velocity based on the time of appearance measured by the timer.

**28.** A concentration meter comprising:

a housing having a vent hole configured to let a mixed gas as a fluid under measurement pass through;
a pair of the vibration transceivers of any one of claims 23 to 25 arranged inside the housing to face each other with a predetermined distance left between the pair of the vibration transceivers themselves;
a temperature sensor disposed inside the housing;
a timer configured to measure a time of appearance of a signal transmitted by any one of the pair of the vibration transceivers; and
a calculating means configured to calculate a propagation velocity and an average molecular weight and gas concentration of the mixed gas based on the time of appearance measured by the timer.

*FIG. 1*

EP 4 412 249 A1

FIG. 2

FIG. 3 A — 10

FIG. 3 B

11    12    4    5

FIG. 3 C

3    12    12    12

FIG. 3 D

Z
Y
X

2

*FIG. 4*

# FIG. 5

*FIG. 6B*

Magnitude [mm/s]

2mm/s

f₁

f₂

Frequency [kHz]

200  300  400  500  600  700  800

*FIG. 6A*

20

21

22

2

Vibration Propagation Direction

14

31

FIG. 7

Thickness T [mm] of Vibration Propagation Member

FIG. 8 A

FIG. 8 B

Gap Distance between Vertical Partitions

Partially Enlarged View of
Vibration Propagation Member

Sensitivity [mV]

Gap Distance [mm] between Vertical Partitions

EP 4 412 249 A1

EP 4 412 249 A1

FIG. 9 A

14a

Signal
Generator

Vibration Propagation Medium

Signal
Measuring
Device

14b

FIG. 9 B

V [mV]

Time

FIG. 9 C

V [mV]

Time

FIG. 10

FIG. 11

*FIG. 12*

# FIG. 13

Z
↑
Y ⊗ → X

Y
↑
Z ⊙ → X

46  48  42  43  44

II ----  II  T

↑ Vibration Propagation Direction

45

47

45

44

EP 4 412 249 A1

EP 4 412 249 A1

*FIG. 14 A*

$P_2$

46  48  42  43  44

$P_1$

45

47

*FIG. 14 B*

$P_1 = P_2$

*FIG. 14 C*

$P_1 > P_2$

*FIG. 14 D*

$P_1 < P_2$

Partially Enlarged Cross-Sectional Views of Vibration Propagation Member

*FIG. 15 B*

Enlarged View of Part A

Wall Thickness T1

43

52

45

Wall Thickness T2

*FIG. 15 A*

A

42a

FIG. 16 B

Enlarged View of Part B

Wall Thickness T3

FIG. 16 A

B

42b

43

52

45

Wall Thickness T4

## FIG. 17B

Enlarged View of Part C

## FIG. 17A

C

42c

43

52

45

## FIG. 18 B

Enlarged View of Part D

## FIG. 18 A

D

42d

43

52

55

45

FIG. 19 A

FIG. 19 B

FIG. 20 A

50

FIG. 20 B

51

52

44

45

FIG. 20 C

43

52

47

Z
Y
X

FIG. 20 D

42

FIG. 21

FIG. 22

Vibration Propagation Direction

*FIG. 23 A*

70

*FIG. 23 B*

71

72

64

65

*FIG. 23 C*

63

72

68

...

68

67

*FIG. 23 D*

Z
Y
X

62

FIG. 24

# FIG. 25

(a)

42

47

(b)

91
90
78
76

(c)

(d)

92

82

(e)

75

Z

Y

X

## INTERNATIONAL SEARCH REPORT

| International application No. |
| --- |
| **PCT/JP2022/035344** |

| A. CLASSIFICATION OF SUBJECT MATTER |
| --- |
| ***H04R 17/00***(2006.01)i; *G01F 1/667*(2022.01)n<br>FI: H04R17/00 330J; G01F1/667 B |
| According to International Patent Classification (IPC) or to both national classification and IPC |

| B. FIELDS SEARCHED |
| --- |
| Minimum documentation searched (classification system followed by classification symbols)<br>H04R17/00; G01F1/667 |
| Documentation searched other than minimum documentation to the extent that such documents are included in the fields searched<br>Published examined utility model applications of Japan 1922-1996<br>Published unexamined utility model applications of Japan 1971-2022<br>Registered utility model specifications of Japan 1996-2022<br>Published registered utility model applications of Japan 1994-2022 |
| Electronic data base consulted during the international search (name of data base and, where practicable, search terms used) |

| C. DOCUMENTS CONSIDERED TO BE RELEVANT | | |
| --- | --- | --- |
| Category* | Citation of document, with indication, where appropriate, of the relevant passages | Relevant to claim No. |
| Y | WO 2019/234969 A1 (HITACHI, LIMITED) 12 December 2019 (2019-12-12)<br>paragraphs [0018]-[0049] | 1-13, 16-17, 20-28 |
| Y | JP 2004-343263 A (MATSUSHITA ELECTRIC IND. COMPANY, LIMITED) 02 December 2004 (2004-12-02)<br>paragraphs [0003], [0012]-[0028] | 1-13, 16-17, 20-28 |
| Y | JP 2009-105709 A (PANASONIC CORPORATION) 14 May 2009 (2009-05-14)<br>fig. 1, etc. | 25-28 |
| Y | JP 2008-175706 A (MATSUSHITA ELECTRIC IND. COMPANY, LIMITED) 31 July 2008 (2008-07-31)<br>paragraph [0023] | 26-28 |
| Y | JP 2003-302387 A (NGK SPARK PLUG COMPANY, LIMITED) 24 October 2003 (2003-10-24)<br>paragraphs [0034]-[0040] | 26-28 |
| A | JP 57-025795 A (ICHINOSE, Yutaka) 10 February 1982 (1982-02-10)<br>entire text, all drawings | 1-28 |

☑ Further documents are listed in the continuation of Box C.  ☑ See patent family annex.

| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| --- | --- |

| Date of the actual completion of the international search | Date of mailing of the international search report |
| --- | --- |
| **15 November 2022** | **29 November 2022** |

| Name and mailing address of the ISA/JP<br><br>**Japan Patent Office (ISA/JP)**<br>**3-4-3 Kasumigaseki, Chiyoda-ku, Tokyo 100-8915**<br>**Japan** | Authorized officer<br><br><br><br>Telephone No. |
| --- | --- |

Form PCT/ISA/210 (second sheet) (January 2015)

## INTERNATIONAL SEARCH REPORT

International application No.

**PCT/JP2022/035344**

### C.    DOCUMENTS CONSIDERED TO BE RELEVANT

| Category* | Citation of document, with indication, where appropriate, of the relevant passages | Relevant to claim No. |
|---|---|---|
| A | JP 2003-078996 A (MATSUSHITA ELECTRIC IND. COMPANY, LIMITED) 14 March 2003 (2003-03-14)<br>        entire text, all drawings | 1-28 |
| A | US 2020/0376520 A1 (UNICTRON TECHNOLOGIES CORPORATION) 03 December 2020 (2020-12-03)<br>        entire text, all drawings | 1-28 |

Form PCT/ISA/210 (second sheet) (January 2015)

## INTERNATIONAL SEARCH REPORT
### Information on patent family members

International application No.

**PCT/JP2022/035344**

| Patent document cited in search report | | | Publication date (day/month/year) | Patent family member(s) | | | Publication date (day/month/year) |
|---|---|---|---|---|---|---|---|
| WO | 2019/234969 | A1 | 12 December 2019 | (Family: none) | | | |
| JP | 2004-343263 | A | 02 December 2004 | (Family: none) | | | |
| JP | 2009-105709 | A | 14 May 2009 | (Family: none) | | | |
| JP | 2008-175706 | A | 31 July 2008 | (Family: none) | | | |
| JP | 2003-302387 | A | 24 October 2003 | (Family: none) | | | |
| JP | 57-025795 | A | 10 February 1982 | (Family: none) | | | |
| JP | 2003-078996 | A | 14 March 2003 | (Family: none) | | | |
| US | 2020/0376520 | A1 | 03 December 2020 | CN | 210533396 | U | |
| | | | | TW | M583052 | U | |
| | | | | DE | 202020102821 | U | |
| | | | | JP | 3224928 | U | |

Form PCT/ISA/210 (patent family annex) (January 2015)

**EP 4 412 249 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004125804 A